(19) Europäisches Patentamt
European Patent Office
Office européen des brevets

(11) Veröffentlichungsnummer: **0 279 351**
**B1**

(12) **EUROPÄISCHE PATENTSCHRIFT**

(45) Veröffentlichungstag der Patentschrift: **06.02.91**

(21) Anmeldenummer: **88101976.4**

(22) Anmeldetag: **11.02.88**

(51) Int. Cl.[5]: **C 09 B 62/51**, C 09 B 62/085, D 06 P 1/38

# (54) Wasserlösliche Azoverbindungen, Verfahren zu deren Herstellung und ihre Verwendung als Farbstoffe.

(30) Priorität: **14.02.87 DE 3704660**

(43) Veröffentlichungstag der Anmeldung:
**24.08.88 Patentblatt 88/34**

(45) Bekanntmachung des Hinweises auf die Patenterteilung:
**06.02.91 Patentblatt 91/06**

(84) Benannte Vertragsstaaten:
**BE CH DE ES FR GB IT LI**

(56) Entgegenhaltungen:
**EP-A-0 064 721**
**EP-A-0 065 211**
**EP-A-0 094 055**

(73) Patentinhaber: **HOECHST AKTIENGESELLSCHAFT**
**Postfach 80 03 20**
**D-6230 Frankfurt am Main 80 (DE)**

(72) Erfinder: **Springer, Hartmut, Dr.**
**Am Erdbeerstein 27**
**D-6240 Königstein/Taunus (DE)**
Erfinder: **Helmling, Walter, Dr.**
**Fichtestrasse 29**
**D-6238 Hofheim am Taunus (DE)**
Erfinder: **Schläfer, Ludwig, Dr.**
**Königsberger Strasse 40**
**D-6233 Kelkheim (Taunus) (DE)**
Erfinder: **Russ, Werner Hubert, Dr.**
**Berliner Strasse 10**
**D-6238 Hofheim am Taunus (DE)**

**EP 0 279 351 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung liegt auf dem Gebiet der faserreaktiven Azofarbstoffe.

Faserreaktive Farbstoffe werden in großem Umfange für das Färben und Bedrucken von textilen Fasermaterialien eingesetzt, und eine große Zahl brauchbarer Reaktivfarbstoffe für verschiedene Anwendungsbereiche stehen zur Verfügung. So sind beispielsweise in der europäischen Patentanmeldungs-Veröffentlichung Nr. 0 094 055 und in den japanischen Offenlegungsschriften Sho-58-46185, Sho-58-46186 und Sho-59-179888 Azofarbstoffe beschrieben, die einen faserreaktiven Rest aus der Vinylsulfon-Reihe und einen weiteren faserreaktiven Rest aus der Monochlor- oder Monofluortriazinyl-Reihe enthalten. Jedoch kann der erreichte technische Stand nicht voll befriedigen. Die bekannten Farbstoffe besitzen gewisse anwendungstechnische Mängel, wie z.B. ungenügende Eingang für bestimmte Färbeverfahren, und teilweise nicht voll befriedigende Echtheiten wie z.B. nicht ausreichende Naßlicht- und Schweißlichtechtheiten.

Der vorliegenden Erfindung lag die Aufgabe zugrunde, neue wasserlösliche Reaktivfarbstoffe mit verbesserten Eigenschaften zu finden, wobei diese neuen Farbstoffe besonders für das Ausziehverfahren geeignet sein und Färbungen mit hohem Echtheitsniveau liefern sollten. Diese Aufgabe wurde mit der vorliegenden Erfindung gelöst.

Gegenstand der Erfindung sind neue, wertvolle, wasserlösliche Azoverbindungen der allgemeinen Formel (1)

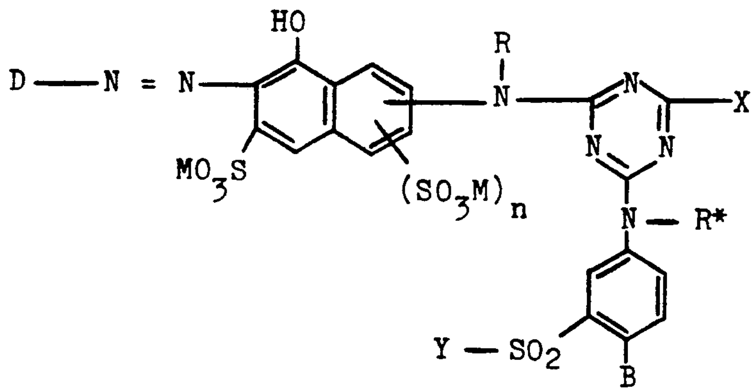

(1)

in welcher bedeuten:

D ist ein Naphthylrest, bevorzugt Naphth-2-yl-Rest, der durch 1, 2 oder 3 Sulfogruppen oder durch eine Gruppe der allgemeinen Formel $Y—SO_2—$ mit Y der nachstehend genannten Bedeutung oder durch eine solche Gruppe $Y—SO_2—$ und 1 oder 2 Sulfogruppen substituiert ist, oder ist ein Rest der allgemeinen Formel (2a) oder (2b)

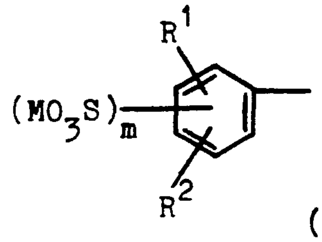

(2a)

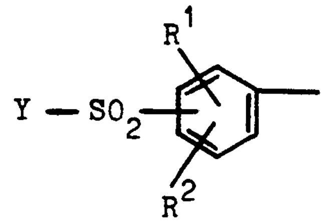

(2b)

in welchen

M und Y die nachstehend angegebenen Bedeutungen haben,

m für die Zahl Null oder 1 steht (wobei im Falle m = Null diese Gruppe ein Wasserstoffatom bedeutet),

$R^1$ ein Wasserstoffatom, eine Alkylgruppe von 1 bis 4 C-Atomen, eine Alkoxygruppe von 1 bis 4 C-Atomen oder eine Carboxygruppe und

$R^2$ ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder eine Halogenatom, wie ein Chlor- oder Bromatom, hiervon bevorzugt ein Wasserstoffatom, eine Alkylgruppe von 1 bis 4 C-Atomen, eine Alkoxygruppe von 1 bis 4 C-Atomen, eine Sulfogruppe oder eine Halogenatom;

n steht für die Zahl Null oder 1 (wobei im Falle von n = Null diese Gruppe eine Wasserstoffatom bedeutet);

R ist ein Wasserstoffatom oder eine Alkylgruppe von 1 bis 4 C-Atomen, die substituiert sein kann, und

R* ist ein Wasserstoffatom oder eine Alkylgruppe von 1 bis 4 C-Atomen, die substituiert sein kann, wobei R und R* zueinander gleiche oder voneinander verschiedene Bedeutungen besitzen können;

X ist eine Fluoratom oder bevorzugt ein Chloratom;

B ist eine Gruppe der allgemeinen Formel (3a) oder (3b)

$—S—R^3$ (3b)

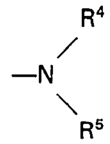

(3c)

in welchen

$R^3$ ein Wasserstoffatom oder eine Alkylgruppe von 1 bis 4 C-Atomen ist, die substituiert sein kann, oder ein gegebenenfalls substituierter Arylrest ist,

$R^4$ ein Wasserstoffatom oder eine Alkylgruppe von 1 bis 8 C-Atomen, bevorzugt von 1 bis 6 C-Atomen, insbesondere von 1 bis 4 C-Atomen ist, die substituiert sein kann, wobei 1 oder dieser Substituenten bevorzugt wasserlöslichmachende Gruppen, wie Sulfo-, Carboxy-, Sulfato- und Phosphatogruppen sind, oder eine Cycloalkylgruppe von 5 bis 8 C-Atomen, wie die Cyclopentyl- oder Cyclohexylgruppe, mit gegebenenfalls 1 bis 3 Methylgruppen und/oder einer Aminogruppe, Alkanoylaminogruppe von 2 bis 5 C-Atomen oder Benzoylaminogruppe als Substituenten ist oder der Phenylrest ist, der durch 1, 2 oder 3, vorzugsweise 1 oder 2, Substituenten aus der Gruppe Sulfo, Carboxy, Halogen, wie Brom und insbesondere Chlor, Alkyl von 1 bis 4 C-Atomen, wie Methyl und Ethyl, Alkoxy von 1 bis 4 C-Atomen, wie Methoxy und Ethoxy, Nitro, eine Gruppe der Formel $—SO_2—Y'$ (worin Y' eine der nachstehend angegebenen Bedeutungen von Y hat oder eine β-Hydroxyethyl-Gruppe ist), Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen, wie Acetylamino, und Benzoylamino substituert sein kann, oder ein Naphthylrest ist, der durch 1, 2 oder 3 Sulfogruppen und/oder eine Gruppe der Formel $—SO_2—Y'$ (mit Y' der obengenannten Bedeutung) substituiert sein kann, und

$R^5$ eine der für $R^4$ angegebenen Bedeutungen besitzt, wobei $R^5$ zu $R^4$ gleich oder von $R^4$ verschieden ist, oder

$R^4$ und $R^5$ zusammen mit dem Stickstoffatom und einem, zwei oder drei Alkylenresten von 1 bis 5 C-Atomen under gegebenenfalls einem oder zwei weiteren Heteroatomen, wie Stickstoff-, Sauerstoff- oder Schwefelatomen, einen 5- bis 8-gliedrigen heterocyclischen Rest bilden, wie beispielsweise den Piperidino-, Piperazino- oder Morpholinorest;

Y ist eine β-Thiosulfatoethyl-, β-Phosphatoethyl- oder β-Chlorethyl-Gruppe oder bevorzugt die Vinylgruppe oder insbesondere bevorzugt eine β-Sulfatoethyl-Gruppe;

die Y können zueinander gleiche oder voneinander verschiedene Bedeutungen haben;

M ist ein Wasserstoffatom oder ein Alkalimetall, wie Natrium, Kalium oder Lithium, oder das Äquivalent eines Erdalkalimetalls, wie des Calciums, bevorzugt jedoch ein Wasserstoffatom und insbesondere ein Alkalimetall.

Die verschiedenen Formelglieder können zueinander gleiche oder voneinander verschiedene Bedeutungen besitzen.

Eine Sulfogruppe ist eine Gruppe der allgemeinen Formel $—SO_3M$, eine Carboxygruppe eine Gruppe der allgemeinen Formel —COOM, eine Thiosulfatogruppe eine Gruppe der allgemeinen Formel $—S—SO_3M$, eine Phosphatogruppe eine Gruppe der allgemeinen Formel $—OPO_3M_2$ und eine Sulfatogruppe eine Gruppe der allgemeinen Formel $—OSO_3M$, jeweils mit M der obengenannten Bedeutung.

Die neuen Azoverbindungen können sowohl in saurer Form als auch in Form ihrer Salze vorliegen. Bevorzugt sind sie in Form der Salze, insbesondere der Alkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Alkylgruppen von 1 bis 4 C-Atomen sind bevorzugt die Methyl- und Ethylgruppe; Alkoxygruppen von 1 bis 4 C-Atomen, sind bevorzugt die Methoxy- und Ethoxygruppe.

Sofern die Alkylgruppen substituiert sind, sind sie vorzugsweise durch 1 oder 2, vorzugsweise 1, Substituenten substituiert, die aus der Gruppe Alkoxy von 1 bis 4 C-Atomen, Sulfo, Carboxy, Hydroxy, Alkanoyloxy von 2 bis 5 C-Atomen, wie Acetyloxy, Sulfato und gegebenenfalls substituiertes Aryl ausgewählt sind.

Arylreste sind vorzugsweise der Phenylrest oder der 1- oder 2-Naphthylrest, insbesondere der Phenylrest. Sofern der Phenylrest substituiert ist, ist er bevorzugt durch 1 oder 2 Substituenten substituiert, die aus der Gruppe Alkyl von 1 bis 4 C-Atomen, Alkoxy von 1 bis 4 C-Atomen, Hydroxy, Nitro, Carboxy, Acetylamino, Sulfo und Chlor, insbesondere Sulfo und Carboxy, ansgewählt sind; sofern der Naphthylrest substituiert ist, ist er bevorzugt durch eine, zwei oder drei Sulfogruppen substituiert. Sofern die Formelreste $R^4$ und $R^5$ substituierte Arylrest bedeuten, kann auch einer oder zwei, bevorzugt einer, der Substituenten gemäß obiger Definition die oben genannte und definierte Gruppe $—SO_2—Y'$ sein.

Substituierte Phenylreste des Formelrestes D sind insbesondere solche, die durch 1, 2 oder 3 Substituenten substituiert sind, die aus der Gruppe von 2 Sulfo, 1 Alkyl von 1 bis 4 C-Atomen, 2 Alkoxy von 1 bis 4 C-Atomen und 1 Chlor ausgewählt sind, wie beispielsweise der 2-Sulfo-phenyl-, 3-Sulfophenyl-, 4-Sulfophenyl-, 2-Sulfo-4-methyl-phenyl-, 2-Sulfo-4-methoxy-phenyl-, 3-Sulfo-4-methoxy-phenyl-, 2-Sulfo-4-chlor-5-methyl-phenyl-, 2,5-Disulfo-phenyl- und 2,5-Disulfo-4-methyl-phenyl-Rest.

Substituierte Naphthylreste des Formelrestes D sind bevorzugt Monosulfo-, Disulfo- und Trisulfo-

naphth-2-yl-Reste, wie beispielsweise der 1-Sulfo-naphth-2-yl-, 5-Sulfo-naphth-2-yl-, 6-Sulfo-naphth-2-yl-, 1,5-Disulfo-naphth-2-yl-, 1,6-Disulfo-naphth-2-yl-, 3,6-Disulfo-naphth-2-yl-, 4,8-Disulfo-naphth-2-yl-, 6,8-Disulfo-naphth-2-yl-, 3,6,8-Trisulfo-naphth-2-yl- und 4,6,8-Trisulfo-naphth-2-yl-Rest.

Weiterhin ist in D, sofern D eine Gruppe der Formel (2a) ist,

$R^1$ bevorzugt ein Wasserstoffatom, eine Methyl-, Ethyl-, Methoxy- oder Ethoxygruppe und

$R^2$ bevorzugt ein Wasserstoffatom, eine Methoxy-, Ethoxy- oder Sulfogruppe oder eine Chloratom.

Sofern D eine Gruppe der Formel (2b) ist, ist $R^1$ bevorzugt ein Wasserstoffatom, eine Methyl-, Ethyl-, Methoxy- oder Ethoxygruppe, insbesondere ein Wasserstoffatom, eine Methyl- oder Methoxygruppe, und $R^2$ ein Wasserstoffatom, eine Methoxy-, Ethoxy- oder Sulfogruppe.

Bevorzugt bedeutet R eine Methyl- oder Ethylgruppe oder eine Wasserstoffatom, und bevorzugt ist R* ein Wasserstoffatom.

Bevorzugt ist der Rest B eine Aminogruppe der allgemeinen Formel (3c). Bevorzugt ist hierin $R^4$ ein Wasserstoffatom, eine Alkylgruppe von 1 bis 4 C-Atomen oder eine durch 1 oder 2 Substituenten, bevorzugt durch 1 Substituenten, aus der Gruppe Sulfo, Carboxy, Sulfato, Phosphato, Alkoxy von 1 bis 4 C-Atomen, Hydroxy, Alkanoyloxy von 2 bis 5 C-Atomen und gegebenenfalls durch Sulfo, Carboxy, Methyl, Methoxy, Ethoxy und/oder Chlor substituiertes Phenyl substituierte Alkylgruppe von 1 bis 4 C-Atomen oder eine Cyclopentyl- oder Cyclohexylgruppe, die durch 1 bis 3 Methylgruppen substituiert sein können, und $R^5$, mit $R^4$ gleich oder von $R^4$ verschieden, ein Wasserstoffatom, eine Alkylgruppe von 1 bis 4 C-Atomen oder eine durch 1 oder 2 Substituenten, bevorzugt 1 Substituenten, aus der Gruppe Sulfo, Carboxy, Sulfato, Phosphato, Alkoxy von 1 bis 4 C-Atomen, Hydroxy, Alkanoyloxy von 2 bis 5 C-Atomen und gegebenenfalls durch Sulfo, Carboxy, Methyl, Methoxy, Ethoxy und/oder Chlor substituiertes Phenyl substituierte Alkylgruppe von 1 bis 4 C-Atomen oder der Phenylrest, der durch 1, 2 oder 3, vorzugsweise 1 oder 2, Substituenten aus der Gruppe Sulfo, Carboxy, Chlor, Methyl, Methoxy, Ethoxy, Nitro und Acetylamino substituiert sein kann, oder ein gegebenenfalls durch 1, 2 oder 3 Sulfogruppen substituierter Naphthylrest oder es bilden $R^4$ und $R^5$ zusammen den Piperidino-, Piperazino- oder Morpholinrest. Insbesondere ist hieren bevorzugt $R^4$ ein Wasserstoffatom, eine Methylgruppe oder eine Ethylgruppe und $R^5$ ein Wasserstoffatom oder eine Alkylgruppe von 1 bis 4 C-Atomen oder eine durch eine oder zwei Sulfatogruppen oder eine Sulfo- oder eine Carboxygruppe substituierte Alkylgruppe von 2 bis 4 C-Atomen oder eine gemäß den obigen, insbesondere bevorzugten Angaben substituierte Phenylgruppe; insbesondere bevorzugt ist $R^5$ eine β-Sulfoethyl-, β-Sulfatoethyl-, Methyl- oder Ethylgruppe.

Bevorzugte Azoverbindungen aus den Verbindungen der allgemeinen Formel (1) sind solche entsprechend einer allgemeinen Formel (1a) und (1b)

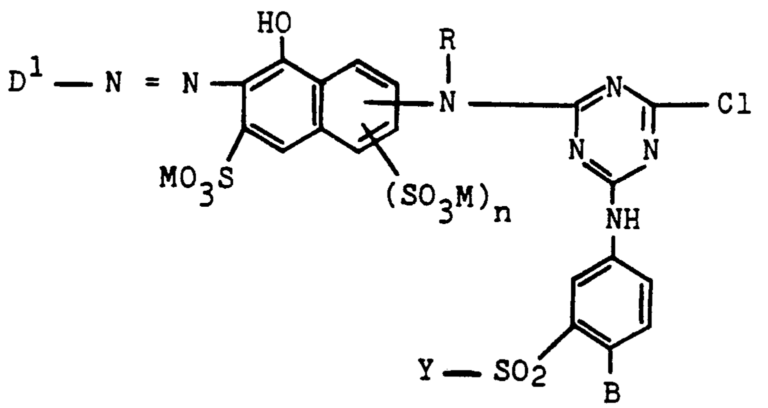

(1a)

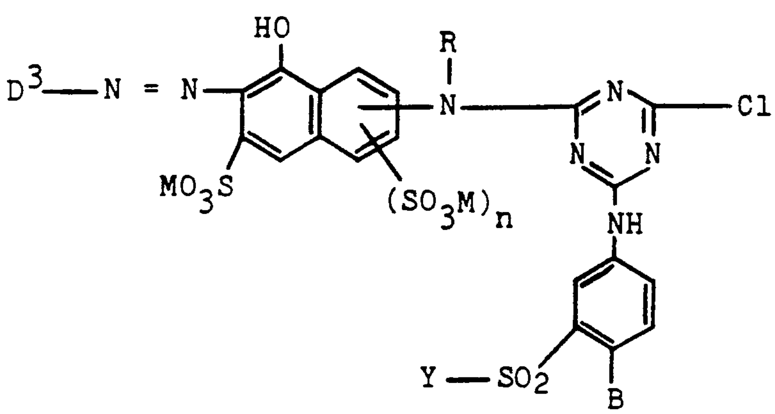

(1b)

in welchen

$D^1$ ein Phenylrest der allgemeinen Formel (2a) mit $R^1$, $R^2$, M und m der obengenannten, insbesondere bevorzugten, Bedeutungen oder eine durch 1, 2 oder 3 Sulfogruppen substituierter Naphth-2-yl-Rest ist und

$D^3$ ein Phenylrest der allgemeinen Formel (2b) mit $R^1$, $R^2$ und Y der obengenannten, insbesondere bevorzugten, Bedeutungen oder ein Naphth-2-yl-Rest ist, der durch eine Gruppe der Formel $Y—SO_2—$ mit Y der obengenannten, insbesondere bevorzugten, Bedeutung oder durch eine solche Gruppe $Y—SO_2—$ und eine oder zwei Sulfogruppen substituiert ist, und

worin die übrigen Formelglieder die obengenannten, insbesondere bevorzugten Bedeutungen besitzen.

Die vorliegende Erfindung betrifft weiterhin Verfahren zur Herstellung der erfindungsgemäßen Verbindungen der allgemeinen Formel (1). Eines dieser Verfahren kann beispielsweise in der Weise ausgeführt werden, daß man eine Azoverbindung der allgemeinen Formel (4)

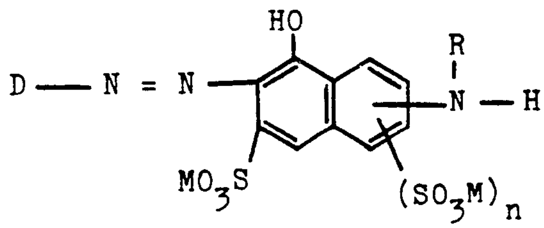

(4)

in welcher, D, M, R und n die obengenannten Bedeutungen haben, und ein aromatisches Amin der allgemeinen Formel (5)

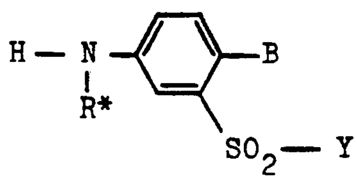

(5)

in welcher B, R* und Y die obengenannten Bedeutungen haben, mit 2,4,6-Trichlor-s-triazin (Cyanurchlorid) oder 2,4,6-Trifluor-s-triazin (Cyanurfluoride) in beliebiger Reihenfolge oder gegebenenfalls gleichzeitig umsetzt. Da die Umsetzungen mit den obengenannten drei möglichen Ausgangsverbindungen in unterschiedlicher Reihenfolge und gegebenenfalls teilweise auch gleichzeitig ausgeführt werden können, sind Varianten dieses erfindungsgemäßen Verfahrens möglich. Bevorzugt führt man die einzelnen Umsetzungen der Aminoverbindungen der allgemeinen Formeln (4) und (5) mit Cyanurchlorid oder Cyanurfluorid nacheinander aus.

Wichtige erfindungsgemäße Verfahrensvarianten zur Herstellung der erfindungsgemäßen Azoverbindungen der allgemeinen Formel (1) sind beispielsweise dadurch gekennzeichnet, daß man eine Dihalogen-triazinylamino-naphthol-Azoverbindung der allgemeinen Formel (6)

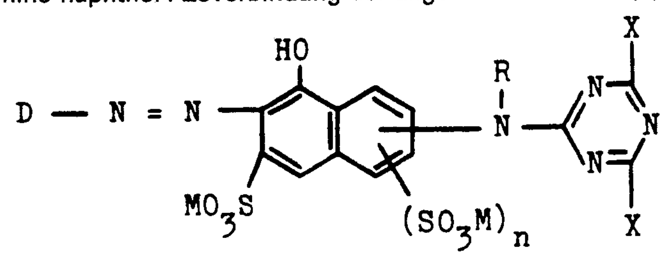

(6)

in welcher D, M, n, R und X die obengenannten Bedeutungen haben, wobei beide X eine zueinander gleiche Bedeutung besitzen, mit einer aromatischen Aminoverbindung der obengenannten und definierten allgemeinen Formel (5) umsetzt oder

daß man eine Dihalogen-triazinylamino-Verbindung der allgemeinen Formel (7)

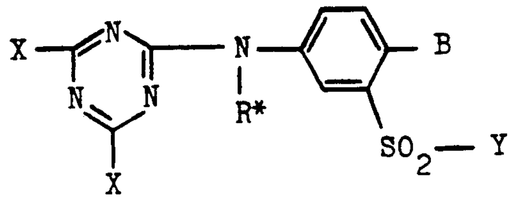

(7)

in welcher B, R*, Y und X die obengenannten Bedeutungen haben, wobei beide X die gleiche Bedeutung besitzen, mit einer Azoverbindung der obengenannten und definierten allgemeinen Form (4) umsetzt.

Ein anderes erfindungsgemäßes Verfahren kann beispielsweise so ausgeführt werden, daß man eine Monohalogen-triazinyl-amino-naphtholsulfonsäure-Verbindung der allgemeinen Formel (8)

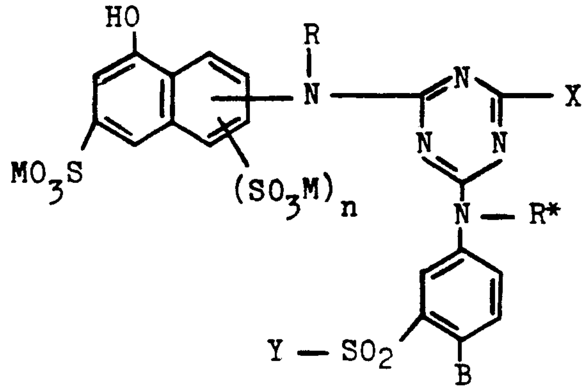

(8)

in welcher B, M, n, R, R*, X und Y die obengenannten Bedeutungen haben, mit einer Diazoniumverbindung eines aromatischen Amins der allgemeinen Formel (9)

$$D{-}NH_2 \qquad (9)$$

in welcher D eine der obengenannten Bedeutungen hat, kuppelt.

Die Ausgangsverbindungen der allgemeinen Formel (6) können hergestellt werden, indem man eine Dihalogen-triazinylamino-naphtholsulfonsäure-Verbindung der allgemeinen Formel (10)

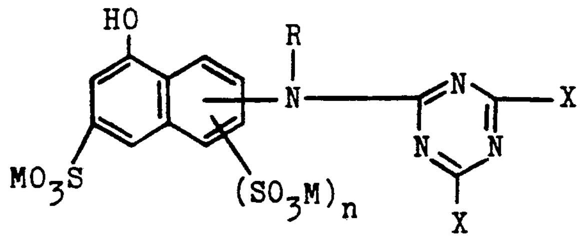

(10)

in welcher beide X die obengenannten Bedeutungen besitzen und zueinander gleich sind und M, R und n die obengenannten Bedeutungen haben, mit einer Diazoniumverbindung eines aromatischen Amins der allgemeinen Formel (9) kuppelt oder indem man eine Amino-Azoverbindung der allgemeinen Formel (4) mit Cyanurchlorid oder Cyanurfluorid umsetzt. Solche Verfahrensweisen — wie auch die genannten Ausgangsverbindungen — sind an und für sich bekannt.

Ebenso können analog an und für sich bekannten Verfahrensweisen die Ausgangsverbindungen entsprechen der allgemeinen Formel (7) hergestellt werden, indem man Cyanurchlorid oder Cyanurfluorid mit einer Verbindung der Formel (5) umsetzt. Die Ausgangsverbindungen der allgemeinen Formel (4) sind ebenso analog bekannten Verfahrensweisen durch Kupplung der Diazoniumverbindung eines aromatischen Amins der allgemeinen Formel (9) mit der aus der allgemeinen Formel (4) ableitbaren Aminonaphtholsulfonsäure erhältlich.

Sowohl die Umsetzung von Cyanurchlorid oder Cyanurfluorid mit einer Verbindung der allgemeinen Formel (5) als auch auch die Umsetzung einer Dihalogentriazinylamino-naphthol-sulfonsäure-Verbindung der allgemeinen Formel (10) mit einer Verbindung der Formel (5) und ebenso die Umsetzung einer Dihalogentriazinylamino-naphthol-sulfonsäure-Azoverbindung der allgemeinen Formel (6) mit einer Verbindung der Formel (5) kann in organischem oder wäßrig-organischem Medium erfolgen.

Vorzugsweise geschieht sie in wäßrigen Medium unter Zusatz säurebindender Mittel, wie Alkali- oder Erdalkalicarbonate, Alkali- oder Erdalkalihydrogencarbonaten oder -hydroxiden oder Alkaliacetaten oder einem basischen Alkaliphosphat, wobei die Alkali- und Erdalkalimetalle vorzugsweise solche des Natriums, Kaliums und Calciums sind. Weiterhin kann der Zusatz von geringen Mengen eines handelsüblichen Netzmittels zweckmäßig sein. Sofern dem wäßrigen Medium ein organisches, mit Wasser mischbares inertes Lösemittel zugesetzt wird, ist dies bevorzugt Aceton oder N-Methyl-pyrrolidon. Diese Kondensationsreaktionen werden bei einer Temperatur zwischen 0 und 90°C, vorzugsweise zwischen 0 und 60°C, und bei einem pH-Wert zwischen 1,5 und 7, insbesondere zwischen 2 und 5, durchgeführt.

In gleicher Weise kann die Umsetzung der Dihalogentriazinylamino-Verbindung entsprechend der allgemeinen Formel (7) mit einer Aminonaphtholsulfonsäure-Azoverbindung der allgemeinen Formel (4) oder mit der Aminonaphtholsulfonsäure als naphtholischer Kupplungskomponente erfolgen.

Die erfindungsgemäße Kupplungsreaktion der Diazoniumverbindung eines Amins der Formel (9) mit einer Verbindung der allgemeinen Formel (8) bzw. (10) kann ebenfalls in wäßrig-organischem Medium

erfolgen, vorzugsweise wird sie in wäßrigem Medium in schwach sauren bis neutralen, gegebenenfalls sehr schwach alkalischen pH-Bereich bei einer Temperatur zwischen 0 und 50°C durchgeführt.

Vorzugsweise erfolgen die Kupplungsreaktionen bei einem pH-Wert zwischen 3 und 7 und einer Temperatur zwischen 5 und 20°C. Die an und für sich mögliche Kupplung im alkalischen Bereich sollte vermieden werden, um eine Schädigung der faserreaktiven Gruppen, insbesondere derjenigen der allgemeinen Formel $—SO_2Y$, zu vermeiden.

Ein weiteres erfindungsgemäßes Verfahren dient zur Herstellung von solchen erfindungsgemäßen Azoverbindungen der allgemeinen Formel (1), in welchen Y für die β-Sulfatoethyl-Gruppe steht; dieses ist dadurch gekennzeichnet, daß man eine Azoverbindung, die der allgemeinen Formel (1) entspricht, in welcher jedoch eines oder beide der Formelreste Y und/oder ein Rest Y' für eine β-Hydroxyethyl-Gruppe stehen, in an und für sich bekannter Verfahrensweise mit einem Sulfatierungsmittel verestert.

Sulfatierungsmittel sind beispielsweise 96 bis 100%ige Schwefelsäure oder Schwefeltrioxid enthaltende Schwefelsäure oder Chlorsulfonsäure. Vorzugsweise wird 98 bis 100%ige Schwefelsäure oder 10%iges Oleum eingesetzt, wobei die Reaktionstemperatur zwischen 0 und 20°C gehalten wird. Bei dieser Veresterung können auch andere hydroxy-substituierte Alkylgruppen in den Formelgliederen B, $R^1$, $R^2$, R und R* in die Sulfatogruppen verestert werden.

Die Ausgangs-Aminoverbindungen der allgemeinen Formel (5) können analog bekannter Verfahrensweise aus den entsprechenden Aminoverbindungen der allgemeinen Formel (5a)

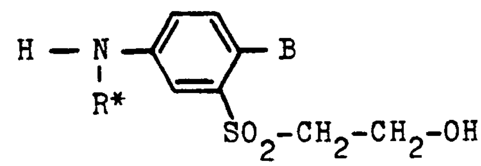

(5a)

in welcher R* ein Wasserstoffatom ist und B die obengenannte Bedeutung hat, herstellen, so beispielsweise durch Umsetzung mit üblichen Sulfatierungs- oder Phosphatierungsmitteln zur Veresterung in die entsprechenden β-Sulfatoethylsulfonyl- bzw. β-Phosphatoethylsulfonyl-Derivate. Der Alkylrest R* kann in üblicher Weise durch entsprechende Alkylierung eingeführt werden. Die β-Sulfatoethylsulfonyl-Verbindung entsprechend der allgemeinen Formel (5) kann sodann in an und für sich bekannter Verfahrensweise in deren Vinylsulfonyl-Verbindung und diese wiederum in deren β-Thiosulfatoethylsulfonyl-Verbindung übergeführt werden. Verbindungen entsprechend den allgemeinen Formeln (5) und (5a) sind beispielsweise aus den Europäischen Patentanmeldungs-Veröffentlichungen Nr. 0 153 599A, 0 171 611A und 0 197 418A bekannt oder können analog den dortigen Angaben hergestellt werden.

Aminoverbindungen der allgemeinen Formel (9), die in erfindungsgemäßer Weise zur Synthese der erfindungsgemäßen Verbindungen (1) dienen und eine Gruppe der oben definierten Formel $—SO_2—Y$ enthalten, sind beispielsweise:

1-Amino-4-(β-sulfatoethylsulfonyl)-benzol, 1-Amino-3-(β-sulfatoethylsulfonyl)-benzol, 1-Amino-2-(β-sulfatoethylsulfonyl)-benzol, 1-Amino-2-methoxy-5-(β-sulfatoethylsulfonyl)-benzol, 1-Amino-2-methoxy-4-(β-sulfatoethylsulfonyl)-benzol, 1-Amino-4-methoxy-3-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methyl-5-(β-sulfatoethylsulfonyl)-benzol, 1-Amino-4-methyl-3-(β-sulfatoethylsulfonyl)-benzol, 1-Amino-2-chlor-4-(β-sulfatoethylsulfonyl)-benzol, 1-Amino-2-chlor-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-2-carboxy-5-(β-sulfatoethylsulfonyl)-benzol, 1-Amino-2-carboxy-4-(β-sulfatoethylsulfonyl)-benzol, 1-Amino-2-sulfo-4-(β-sulfatoethylsulfonyl)-benzol, 1-Amino-2-sulfo-5-(β-sulfatoethylsulfonyl)-benzol, 1-Amino-2,5-dimethoxy-4-(β-sulfatoethylsulfonyl)-benzol, 1-Amino-2,4-dimethoxy-5-(β-sulfatoethylsulfonyl)-benzol, 1-Amino-2,5-diethoxy-4-(β-sulfatoethylsulfonyl)-benzol, 1-Amino-2-methoxy-5-methyl-4-(β-sulfatoethylsulfonyl)-benzol, 1-Amino-2-methyl-5-methoxy-4-(β-sulfatoethylsulfonyl)-benzol, 1-Amino-2,5-dimethyl-4-(β-sulfatoethylsulfonyl)-benzol, 1-Amino-2,4-disulfo-5-(β-sulfatoethylsulfonyl)-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin sowie deren entsprechenden β-Thiosulfatoethylsulfonyl-, β-Phosphateoethylsulfonyl-, β-Chloroethylsulfonyl- und Vinylsulfonyl-Derivate.

Aromatische Aminoverbindungen der allgemeinen Formel (9), die erfindungsgemäß zur Herstellung der erfindungsgemäßen Verbindungen (1) dienen und die keine faserreaktive Gruppe entsprechend der allgemeinen Formel $—SO_2—Y$ enthalten, sind beispielsweise:

1-Aminobenzol-2-sulfonsäure, 1-Aminobenzol-3- und -4-sulfonsäure, 2-Amino-4-sulfo-benzoesäure, 2-Amino-5-sulfo-benzoesäure, 4-Amino-2-sulfo-benzoesäure, 4-Aminotoluol-2- und -3-sulfonsäure, 2-Amino-toluol-4- und -5-sulfonsäure, 2-Amino-2-toluol-4-carbonsäure, Anthranilsäure, Anilin-, 2-, 3- und 4-Methylanilin, 2-, 3- und 4-Anisidin, 2-, 3- und 4-Chloranilin, 4-Amino-benzoesäure, 2-Amino-anisol-4- und -5-sulfonsäure, 4-Amino-anisol-2- und -3-sulfonsäure, 3-Chlor-2-aminotoluol-5-sulfonsäure, 4-Chlor-2-amino-toluol-5-sulfonsäure, 5-Chlor-2-amino-toluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4- und -3,5-disulfonsäure, 2-Amino-toluol-3,5-disulfonsäure, 4-Amino-1,3-dimethyl-5-sulfonsäure, 2-Amino-toluol-4,5- und -4,6-disulfonsäure, 4-Aminotoluol-2,5-disulfonsäure, 2-Aminonaphthalin-1-sulfonsäure, 2-Amino-naphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Amino-naphthalin-6,8-disulfonsäure, 2-Aminonaphthalin-1,5-, -1,6- und -1,7-disulfonsäure, 2-Aminonaphthalin-5,7-, -3,6-, -3,7- und -4,7-disulfonsäure, 1-Aminonaphthalin-2,4-, -2,5-, -3,6-, -3,7-, -3,8-, -4,6-, -4,7-, -4,8-, -5,7- und -6,8-disulfonsäure, 2-Aminonaphthalin-3,6,8-trisulfonsäure, 2-Aminonaphthalin-4,6,8- und -1,5,7-trisulfonsäure, 1-Amino-naphthalin-2,4,7-trisulfonsäure, 1-Amino-naphthalin-2,4,8-, -3,5,7-, -3,6,8- und -4,6,8-trisulfonsäure.

Aminonaphtholsulfonsäuren, die zur Synthese der erfindungsgemäßen Azoverbindungen (1) dienen und die, gegebenenfalls nach Überführung in deren Triazinylamino-Derivate, in orth-Stellung zur Hydroxygruppe mit der Diazoniumverbindung des aromatischen Amins der allgemeinen Formel (9) gekuppelt werden, sind insbesondere 1-Amino-3,6-disulfo-8-naphthol, 1-Amino-4,6-disulfo-8-naphthol, 2-Amino-3,6-disulfo-8-naphthol, 3-Amino-6-sulfo-8-naphthol, 3-Amino-4,6-disulfo-8-naphthol, 3-Methylamino-6-sulfo-8-naphthol, 4-Amino-6-sulfo-8-naphthol, 2-Amino-6-sulfo-8-naphthol, 1-Amino-4-sulfo-8-naphthol und 2-Methylamino-6-sulfo-8-naphthol.

Verbindungen entsprechend der allgemeinen Formel (5), die als Ausgangsverbindungen zur Synthese der erfindungsgemäßen Azoverbindungen dienen, sind beispielsweise:

4-Dimethylamino-3-(β-sulfatoethylsulfonyl)-anilin,
4-Ethylamino-3-(β-sulfatoethylsulfonyl)-anilin,
4-(N-Morpholino)-3-(β-sulfatoethylsulfonyl)-anilin,
4-N-(β-Sulfatoethyl)-amino-3-(β-sulfatoethylsulfonyl)-anilin,
4-[N-Methyl-N-(β-sulfatoethyl)]-amino-3-(β-sulfatoethylsulfonyl)-anilin,
4-N-(β-Sulfoethyl)-amino-3-(β-sulfatoethylsulfonyl)-anilin,
4-[N-Methyl-N-(β-sulfoethyl])-amino-3-(β-sulfatoethylsulfonyl)-anilin,
4-N-(Carboxymethyl)-amino-3-(β-sulfatoethylsulfonyl)-anilin,
4-N-[β-(4′-Sulfophenyl)-ethyl]-amino-3-(β-sulfatoethylsulfonyl)-anilin,
4-Methylamino-3-(β-sulfatoethylsulfonyl)-anilin,
4-N-(γ-Sulfato-n-propyl)-amino-3-(β-sulfatoethylsulfonyl)-anilin,
4-N-[β-(β′-Sulfato-ethoxy)-ethyl]-amino-3-(β-sulfatoethylsulfonyl)-anilin,
4-[N-Methyl-N-(γ-sulfato-n-propyl])-amino-3-(β-sulfatoethylsulfonyl)-anilin,
4-[(β-Sulfatoethyl)-thio]-3-(β-sulfatoethylsulfonyl)-anilin,
3-(β-Sulfatoethylsulfonyl)-1,4-diaminobenzol,
4-N-(β-Sulfatoethyl)-amino-3-(β-thiosulfatoethylsulfonyl)-anilin,
4-N-(β-Phosphatoethyl)-amino-3-(β-phosphatoethylsulfonyl)-anilin,
4-N-(β-Sulfato-n-propyl)-amino-3-(β-sulfatoethylsulfonyl)-anilin,
4-N-(β,γ-Disulfato-n-propyl)-amino-3-(β-sulfatoethylsulfonyl)-anilin,
4-N-(β-Carboxyethyl)-amino-3-(β-sulfatoethylsulfonyl)-anilin,
4-N-(β-(β′-Sulfatoethylamino)-ethyl]-amino-3-(β-sulfatoethylsulfonyl)-anilin,
4-N-{β-[N′-Methyl-N′-(β′-sulfatoethyl)-amino]-ethyl}-amino-3-(β-sulfatoethylsulfonyl)-anilin,
4-N-[(β-Sulfato-α-methyl)ethyl]amino-3-(β-sulfatoethylsulfonyl)-anilin,
4-Diethylamino-3-(β-sulfatoethylsulfonyl)-anilin und
4-N-{β-[4′-(β-Sulfatoethylsulfonyl)-phenyl]-ethyl}-amino-3-(β-sulfatoethylsulfonyl)-anilin,

sowie deren Derivate, in denen die Sulfatogruppe(n) und/oder Phosphatogruppe durch die Hydroxygruppe ersetzt sind. Bevorzugt von diesen Verbindungen sind

4-[N-Methyl-N-(β-sulfoethyl)]-amino-3-(β-sulfatoethylsulfonyl)-anilin,
4-N-(β-Sulfatoethyl)-amino-3-(β-sulfatoethylsulfonyl)-anilin,
4-[N-Methyl-N-(β-sulfatoethyl)]amino-3-(β-sulfatoethylsulfonyl)-anilin,
4-N-(β-Sulfoethyl)-amino-3-(β-sulfatoethylsulfonyl)-anilin und
4-Diethylamino-3-(β-sulfatoethylsulfonyl)-anilin.

Die Abscheidung der erfindungsgemäß hergestellten Verbindungen aus de Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Die neuen erfindungsgemäßen Verbindungen (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt

als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben von hydroxy- und/oder carbonamidgruppenhaltigen Materialien bzw. Verfahren zu deren Anwendung auf diesen Substraten. Eingeschlossen sind hierbei die Massefärbung, beispielsweise von Folien aus Polyamid, und die Färbung durch Bedrucken. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien oder deren Regeneratprodukte und Polvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf de genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf de gewünschte Färbetemperatur erwärmt und den Färbe prozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und eine sehr guter Farbaufbau erhalten, wobei durch Verweilen bei Raumtemperatur oder erhöhter Temperatur, beispielswise bis zu etwa 60°C, durch Dämpfen oder mit Trockenhitzen in überlicher Weise fixiert werden kann.

Ebenfalls erhält man nach den üblichen Druckverfahren für Cellulosefasern, — die entweder einphasig durchgeführt werden können, beispielsweise durch Bedrucken mit einer Natriumcarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad der durch Überklotzen mit einer alkalischen elektrolythaltigen Klotzflotte mit anschließendem Verweilen diese behandelten Materials oder anschließendem Dämpfen oder anschließender Behandlung mit Trockenhitze, durchgeführt werden können, — farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Neben dem üglichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden überlicherweise aus saurem Milieu ausgeführt. So kann man beispielsweise dem Färbebad Essigsäure und/oder Ammoniumsulfat und/oder Essigsäure und Ammoniumcarbonat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise aus Basis eines Umsetzungsproduktes von Cyanurchlorid mit der dreifach molaren Menge einer Aminobenzolsulfonsäure und/oder einer Aminonaphthalinsulfonsäure oder

auf Basis eines Umsetzungsproduktes von bespielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Azoverbindungen hergestellten Färbungen und Drucke auf Cellulosefasermaterialien besitzen eine hohe Farbstärke, außerdem gute Lichtechtheiten und Naßechtheiten, wie Wasch-, Walk-, Wasser-, Seewasser-, Überfärbe- und Schweißechtheiten, darüber hinaus eine gute Plissierechtheit, Bügelechtheit under Reibechtheit. Ebenso ist die gute Schweißlichtechtheit, Chlorwasserechtheit und gute Naßlichtechtheit der mit Trinkwasser benetzten Färbungen hervorzuheben.

Die nachstehenden Beispiele dienen zur Erläuterung der Erfindung. Die formelmäßig beschriebenen Verbindungen sind in form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Aisgangsverbindungen als solche oder in Form ihrer Salze, vorzugsweise, Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Die in den Beispielen für die erfindungsgemäßen Monazoverbindungen angegebenen $\lambda_{max}$-Wert stellen die Absorptionsmaxima im sichtbaren Bereich, gemessen an den Alkalimetallsalzen der erfindungsgemäßen Monoazoverbindungen in wäßriger Lösung, dar.

Beispiel 1

a) 240 Teile 4-(N-Methyl-N-β-hydroxyethyl)-amino-3-(β-hydroxyethylsulfonyl)-anilin werden bei 5 bis 10°C in 1800 Teilen 10%iges Oleum eingetragen und bei etwa 10°C 12 bis 14 Stunden gerührt. Sodann rührt man die Reaktionslösung in Eis ein und neutralisiert das Gemisch unter Zugabe von Eis mittels Natriumhydrogencarbonat bis auf einen pH-Wert von 6. Die Lösung wird sodann bei 50°C unter reduziertem Druck eingedampft.

b) 224 Teile 2-Sulfo-4-methoxy-anilin werden in üblicher Weise in 3000 Teilen salzsaurem Eiswasser bei einem pH-Wert von 1,5 mittels 200 Volumenteilen einer wäßrigen 5n-Natriumnitritlösung diazotiert. Nach Beendigung der Diazotierungsreaktion wird überschüssige salpetrige Säure mit Amidosulfonsäure zerstört und die Diazoniumsalzlösung unter Einhaltung eines pH-Wertes zwischen 4 und 5 in 1100 Teile einer wäßrigen, neutralen Lösung des Natriumsalzes von 240 Teilen 3-Amino-6-sulfo-8-naphthol eingerührt. Um die Kupplungsreaktion zu vervollständigen, wird der pH-Wert sodann auf 6 bis 6,5 gestellt und der Reaktionsansatz auf 30°C erwärmt. Die gebildete Monoazoverbindung wird mit 10% Natriumchlorid (bezogen auf das Gewicht der Reaktionslösung) ausgesalzen und isoliert.

c) 45,3 Teile der unter b) hergestellten Monoazoverbindung werden in 200 Teilen Wasser angerührt und zu einer Suspension von 19,5 Teilen Cyanurchlorid in 100 Teilen Wasser und 200 Teilen Eis eingerührt; man rührt bei etwa 20°C unter Einhaltung eines pH-Wertes von 4,5 bis zur beendeten Kondensationsreaktion nach, gibt sodann 47,8 Teile des unter a) hergestellten wasserlöslichen 4-(N-Methyl-N-β-sulfatoethylamino)-3-(β-sulfatoethylsulfonyl)-anilins hinzu, stellt mit Natriumcarbonat einen pH-Wert von 4,5 ein, erwärmt den Reaktionsansatz unter Einhaltung diese pH-Wertes auf 50°C und rührt noch einige Zeit unter diesen Reaktionsbedingungen bis zur Beendigung der Kondensationsreaktion nach. Der erfindungsgemäße Azoverbindung wird aus der Syntheselösung nach deren üblichen Klärung entweder durch Sprühtrockung oder durch Aussalzen mit Natriumchlorid isoliert.

Die erfindungsgemäße Monoazoverbindung der Formel (in Form der freien Säure geschrieben)

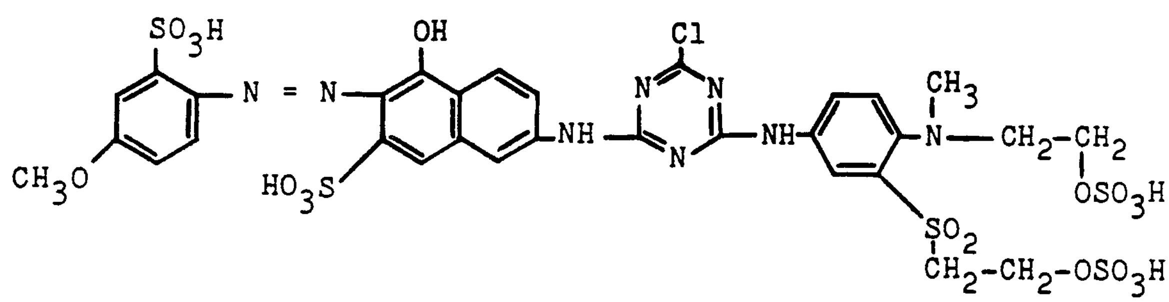

($\lambda_{max}$ = 501 nm)

wird als Natriumsalz in Form eines roten, Elektrolytsalze (wie Natriumchlorid und Natriumsulfat) enthaltendes Pulver erhalten. Die erfindungsgemäße Verbindung ist sehr gut wasserlöslich und besitzt sehr gute Farnstoffeigenschaften. Sie färbt die in der Beschreibung genannten Materialien, insbesondere

jedoch Cellulosefasermaterialien nach den für faserreaktive Farbstoffe üblichen Applikations- und Fixiermethoden in kräftigen, klaren, gelbstichig roten Tönen mit hohem Fixiergrad. Die mit ihr erhältlichen Färbungen und Druck zeigen gute Naßechtheitseigenschaften, wie insbesondere gute Waschechtheiten und gute Naßlichttechtheiten.

Beispiel 2

Zur Herstellung einer erfindungsgemäßen Azoverbindung verährt man gemäß Beispiel 1, setzt jedoch anstelle von 2-Sulfo-4-methoxy-anilin die äquivalente Menge an 2-Sulfo-4-ethoxy-anilin ein.

Die erhaltene erfindungsgemäße Monoazoverbindung (mit $\gamma_{max}$ = 503 nm) besitzt sehr gute faserreaktive Farbstoffeigenschaften und eine sehr gute Wasserlöslichkeit. Sie zeichnet sich insbesondere auf Cellulosefasermaterialien durch einen hohen Fixiergrad aus und liefert auf diesem Material farbstarke, gelbstichig rote Färbungen und Drucke mit guten Echtheitseigenschaften, von denen insbesondere die Naßechtheitseigenschaften, wie Waschechtheiten und die Naßlichtechtheiten von mit Trinkwasser oder einer Schweißlösung benetzten Färbungen, hervorgehoben werden können.

Beispiel 3

Zur Herstellung einer erfindungsgemäßen Azoverbindung verfährt man gemäß Beispiel 1, setzt jedoch anstelle von 2-Sulfo-4-methoxy-anilin die äquivalente Menge an 4-Sulfo-2-methoxy-anilin ein.

Die erhaltene erfindungsgemäße Monoazoverbindung (mit $\lambda_{max}$ = 504 nm) besitzt sehr gute faserreaktive Farbstoffeigenschaften und liefert insbesondere auf Cellulosefastermaterialien farbstarke, gelbstichig rote Färbungen und Drucke mit guten Echtheitseigenschaften, von denen insbesondere die Naßechtheitseigenschaften, wie guten Waschechtheiten und guten Naßlichtechtheitseigenschaften, hervorgehoben werden können.

Beispiel 4

61 Teile 1,5-Disulfo-2-amino-naphthalin werden in üblicher Weise (beispielsweise gemäß Beispiel 1b) diazotiert, und dia Diazoniumsalzlösung wird in 430 Teile einer waßrigen neutralen Lösung des Natriumsalzes von 96 Teilen 3-Amino-6-sulfo-8-naphthol unter Einhaltung eines pH-Wertes von etwa 5,5 eingerührt. Man rührt bei etwa 20°C und einem pH-Wert von 6,5 noch bis zur Beendigung der Kupplungsreaktion nach und isoliert die Azoverbindung durch Aussalzen mittels 20% Natriumchlorid (bezogen auf das Gewicht der Reaktionslösung).

b) 19,4 Teile der unter a) hergestellten Azoverbindung werden in 200 Teilen Wasser angerührt und zu einer Suspension von 6,8 Teilen Cyanurchlorid in 100 Teilen Wasser und 200 Teilen Eis gegeben. Man rührt bei etwa 20°C und bei einem pH-Wert von 4,5 noch bis zur Beendigung der Kondensationsreaktion nach und gibt sodann 18,3 Teile der in Beispiel 1a) hergestellten Anilinverbindung hinzu, stellt den Ansatz mit Natriumcarbonat auf einen pH-Wert von 4,5, erwärmt ihn auf 50°C und führt die Kondensationsreaktion bei 50°C und einem pH-Wert von 4,5 zu Ende. Die erfindungsgemäße Azoverbindung wird aus der Syntheselösung nach deren üblichen Klärung entweder durch Sprühtrocknung oder durch Aussalzen mit Natriumchlorid isoliert.

Die erfindungsgemäße Monoazoverbindung der Formel (in Form der freien Säure geschrieben)

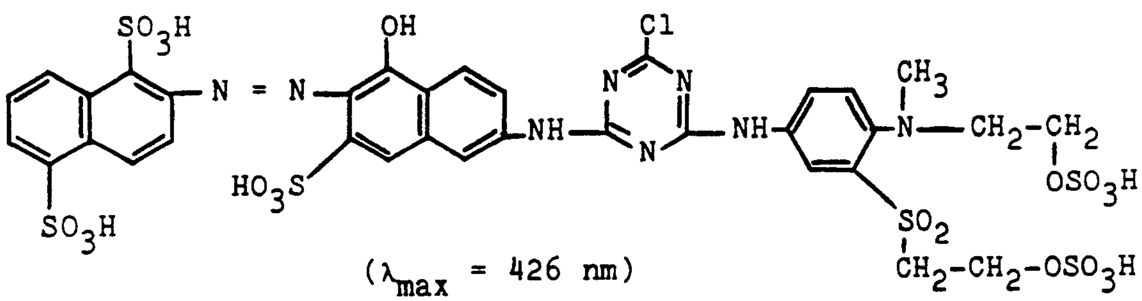

($\lambda_{max}$ = 426 nm)

wird als Natriumsalz in Form eines roten, Elektrolytsalze (wie Natriumchlorid und Natriumsulfat) enthaltendes Pulver erhalten. Die erfindungsgemäße Verbindung besitzt sehr gute Farbstoffeigenschaften. Sie färbt mit hohem Fixiergrad die in der Beschreibung genannten Materialien, insbesondere Cellulosefasermaterialien, nach den für faserreaktive Farbstoffe üblichen Applikations- und Fixiermethoden in kräftigen, klaren, orange-roten Tönen. Die mit ihr erhältlichen Färbungen und Drucke zeigen eine sehr geringe Phototropie und gute Naßechtheitseigenschaften, wie eine gute Chlorwasserechtheit.

Beispiel 5

a) Man setzt 3-Amino-6-sulfo-8-naphthol mit Cyanurchlorid zu deren Monokondensationsprodukt um, indem man 120 Teile einer wäßrigen, neutralen Lösung des Natriumsalzes von 24 Teilen 3-Amino-6-sulfo-8-naphthol zu einer Suspension von 20 Teilen Cyanurchlorid in 100 Teilen Wasser und 100 Teilen Eis gibt und die Reaktion unter Einhaltung eines pH-Wertes von 3 bis 3,5 und einer Temperatur von 5 bis 10°C unter Rühren während 8 Stunden zu Ende führt.

b) 28 Teile 4-(β-Sulfatoethylsulfonyl)-anilin werden in üblicher Weise diazotiert. Die wäßrige, salzsaure Diazoniumsalzsuspension wird sodann in die unter a) hergestellte Reaktionslösung bei einem pH-Wert zwischen 3 und 4 eingerührt. Zur vollständigen Kupplungsreaktion erhöht man anschließend den pH-Wert auf 5 bis 6 und rührt bei etwa 20°C noch etwa 12 Stunden nach.

c) 42 Teile 4-N-(β-Sulfatoethyl)-amino-3-(β-sulfatoethylsulfonyl)-anilin werden zu der unter b) erhaltenen Syntheselösung gegeben; der Ansatz wird bei eta 20°C noch 2 Stunden bei einem pH-Wert von 5 bis 6 nachgerührt, sodann auf 40 bis 45°C erwärmt und bei dieser Temperatur noch weitere 4 Stunden nachgerührt. Die erhaltene erfindungsgemäße Azoverbindung wird aus der Syntheselösung nach deren üblichen Klärung durch Sprühtrocknung oder durch Aussalzen mit Natriumchlorid isoliert.

Die erfindungsgemäße Monoazoverbindung der Formel (in Form der freien Säure geschrieben)

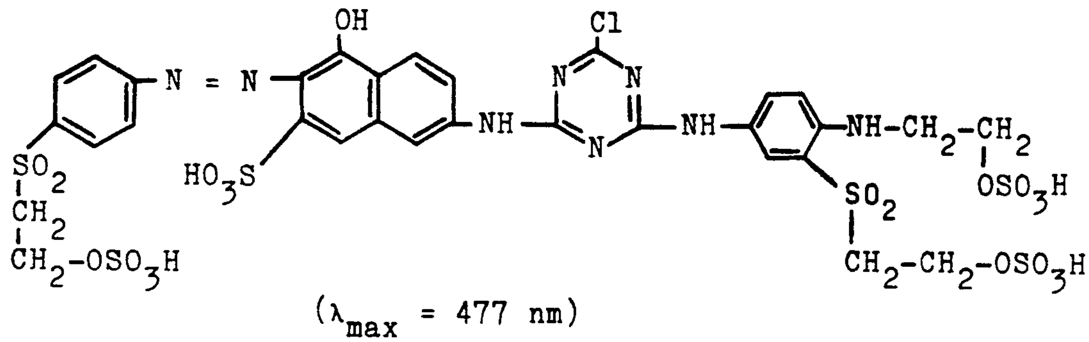

($\lambda_{max}$ = 477 nm)

wird als Natriumsalz in Form eines roten, Elektrolytsalze (wie Natriumchlorid und Natriumsulfat) enthaltendes Pulver erhalten. Di erfindungsgemäße Verbindung besitzt sehr gute Farbstoffeigenschaften und färbt die in der Beschreibung genannten Materialien, insbesondere jedoch Cellulosefastermaterialien nach den für faserreaktive Farbstoffe üblichen Applikations- und Fixiermethoden in kräftigen, klaren, rotstichig gelben Tönen. Die mit der erfindungsgemäßen Verbindung erhältlichen Färbungen und Drucke zeigen gute Naßechtheitseigenschaften.

Beispiel 6

Zur Herstellung einer erfindungsgemäßen Azoverbindung verfährt man gemäß der im Beispiel 5 angegebenen Verfahrenweise, setzt jedoch anstelle von 4-(β-Sulfatoethylsulfonyl)-anilin die äquivalente Menge an 2-Methoxy-5-(β-sulfatoethylsulfonyl)-anilin als Diazokomponente ein.

Die synthetisierte erfindungsgemäße Monoazoverbindung (mit $\lambda_{max}$ = 493 nm) besitzt sehr gute faserreaktive Farbstoffeigenschaften und liefert insbesondere auf Cellulosefasermaterialien nach den in der Technik üblichen Applikations- und Fixierverfahren farbstarke Färbungen und Drucke mit gelbstichig roter Nuance und guten Echtheiten.

Beispiel 7

Zur Herstellung einer erfindungsgemäßen Azoverbindung verfährt man gemäß der im Beispiel 5 angegebenen Verfahrensweise, setzt jedoch anstelle von 4-(β-Sulfatoethylsulfonyl)-anilin die äquivalente Menge an 4-Methoxy-3-(β-sulfatoethylsulfonyl)-anilin als Diazokomponente ein.

Die synthetisierte erfindungsgemäße Monoazoverbindung (mit $\lambda_{max}$ = 493 nm) besitzt sehr gute faserreaktive Farbstoffeigenschaften und liefert insbesondere auf Cellulosefasermaterialien nach den in der Technik üblichen Applikations- und Fixierverfahren farbstarke Färbungen und Drucke mit gelbstichig roter Nuance und guten Echtheiten.

Beispiele 8 bis 60

In den nachfolgenden Tabellenbeispielen sind weitere erfindungsgemäße Verbindungen mit Hilfe ihrer Komponenten entsprechend einer allgemeinen Formel (A)

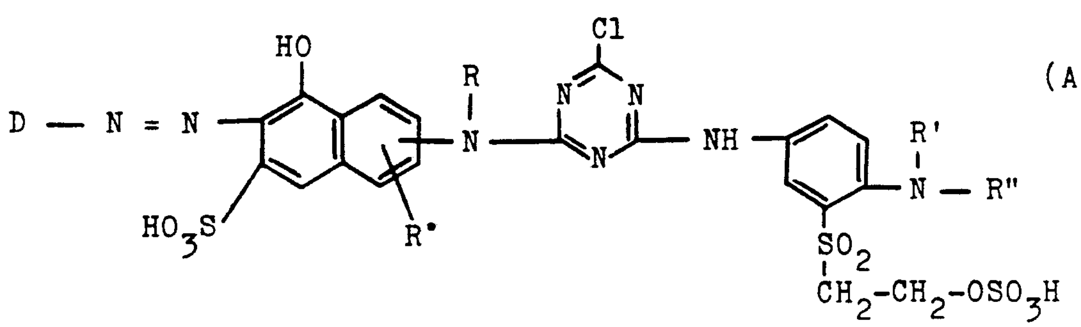

(A)

mit $R^o$ gleich einem Wasserstoffatom oder einer Sulfogruppe beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit den aus Formel (A) ersichtlichen Komponenten (der Diazo-

komponente D—$NH_2$, Cyanurchlorid, der Amino-naphthol-sulfonsäure und der an den Triazinrest ankondensierbaren Anilinverbindung entsprechend der allgemeinen Formel (5)) herstellen. Sie besitzen faserreaktive Farbstoffeigenschaften und liefern insbesondere auf Cellulosefasermaterialien nach den für den faserreaktive Farbstoffen üblichen Applikations- und Fixiermethoden farbstake, echte Färbungen und Drucke in den in dem jeweiligen Tabellenbeispiel für Färbungen auf Baumwolle angegeben Farbtönen.

Verbindung der Formel (A) mit

| Bsp. | D gleich ... | Aminonaphthol-sulfonsäure | R' gleich ... | R" gleich ... | Farbton |
|---|---|---|---|---|---|
| 8 | 2-Sulfo-4-methoxy-phenyl | 3-Amino-6-sulfo-8-naphthol | Wasserstoff | ß-Sulfatoethyl | gelbst. rot |
| 9 | 2-Sulfo-4-ethoxy-phenyl | dito | Wasserstoff | dito | dito |
| 10 | dito | 3-Methylamino-6-sulfo-8-naphthol | Wasserstoff | dito | dito |
| 11 | 2-Sulfo-4-methoxy-phenyl | dito | Wasserstoff | dito | dito |
| 12 | 1,5-Disulfo-naphth-2-yl | 3-Amino-6-sulfo-8-naphthol | Wasserstoff | dito | orange |
| 13 | dito | 3-Methylamino-6-sulfo-8-naphthol | Wasserstoff | dito | orange |
| 14 | dito | dito | Methyl | dito | orange |
| 15 | dito | 1-Amino-4,6-di-sulfo-8-naphthol | Ethyl | Ethyl | rot |
| 16 | 2-Sulfo-phenyl | dito | Ethyl | Ethyl | rot |
| 17 | 2-Sulfo-4-methoxy-phenyl | 2-Amino-6-sulfo-8-naphthol | Methyl | ß-Sulfatoethyl | gelbst. rot |
| 18 | dito | 2-Methylamino-6-sulfo-8-naphthol | Methyl | dito | dito |
| 19 | dito | dito | Wasserstoff | dito | dito |
| 20 | dito | 2-Amino-6-sulfo-8-naphthol | Wasserstoff | ß-Sulfatoethyl | dito |

| Bsp. | Verbindung der Formel (A) mit D gleich ... | Aminonaphthol-sulfonsäure | R' gleich ... | R" gleich ... | Farbton |
|---|---|---|---|---|---|
| 21 | dito | 3-Amino-6-sulfo-8-naphthol | Methyl | ß-Sulfoethyl | dito |
| 22 | dito | dito | Wasserstoff | dito | dito |
| 23 | 1,5-Disulfo-naphth-2-yl | dito | Wasserstoff | dito | orange |
| 24 | dito | dito | Methyl | dito | orange |
| 25 | dito | 3-Methylamino-6-sulfo-8-naphthol | Methyl | dito | orange |
| 26 | 3,6,8-Trisulfo-naphth-2-yl | 3-Amino-6-sulfo-8-naphthol | Ethyl | Ethyl | gelbst. rot |
| 27 | 2-Sulfo-4,6-dimethyl-phenyl | dito | Methyl | ß-Sulfatoethyl | orange |
| 28 | dito | dito | Wasserstoff | dito | orange |
| 29 | 2-Sulfo-phenyl | 1-Amino-3,6-disulfo-8-naphthol | Ethyl | Ethyl | blaust. rot |
| 30 | 2-Sulfo-4-methyl-phenyl | dito | Methyl | ß-Sulfatoethyl | dito |
| 31 | 1-Sulfo-naphth-2-yl | dito | Methyl | dito | dito |
| 32 | 1,5-Disulfo-naphth-2-yl | dito | Ethyl | Ethyl | dito |
| 33 | 2,5-Disulfo-phenyl | dito | Ethyl | Ethyl | blaust. rot |
| 34 | 2-Sulfo-4-methoxy-phenyl | 3-Methylamino-6-sulfo-8-naphthol | Methyl | ß-Sulfoethyl | gelbst. rot |

Verbindung der Formel (A) mit

| Bsp. | D gleich ... | Aminonaphthol-sulfonsäure | R' gleich ... | R" gleich ... | Farbton |
|---|---|---|---|---|---|
| 35 | 2-Sulfo-4-ethoxy-phenyl | dito | Methyl | dito | dito |
| 36 | 4-Sulfo-2-methoxy-phenyl | dito | Methyl | dito | dito |
| 37 | 2-Methoxy-5-(ß-sulfatoethylsulfonyl)-phenyl | 3-Amino-6-sulfo-8-naphthol | Methyl | ß-Sulfatoethyl | dito |
| 38 | 4-Methoxy-3-(ß-sulfatoethylsulfonyl)-phenyl | dito | Methyl | dito | dito |
| 39 | 4-(ß-Sulfatoethyl-sulfonyl)-phenyl | dito | Methyl | dito | dito |
| 40 | 2-Methoxy-5-methyl-4-(ß-sulfatoethyl-sulfonyl)-phenyl | dito | Methyl | dito | dito |
| 41 | 2,5-Dimethoxy-4-(ß-sulfatoethylsulfonyl)-phenyl | dito | Methyl | dito | dito |
| 42 | 2-Methoxy-5-(ß-sulfatoethylsulfonyl)-phenyl | 3-Methylamino-6-sulfo-8-naphthol | Methyl | ß-Sulfatoethyl | gelbst. rot |
| 43 | 4-Methoxy-3-(ß-sulfatoethylsulfonyl)-phenyl | dito | Methyl | dito | dito |

Verbindung der Formel (A) mit

| Bsp. | D gleich ... | Aminonaphthol-sulfonsäure | R' gleich ... | R" gleich ... | Farbton |
|---|---|---|---|---|---|
| 44 | 2,5-Dimethoxy-4-(ß-sulfatoethylsulfonyl)-phenyl | dito | Methyl | dito | dito |
| 45 | 4-(ß-Sulfatoethylsulfonyl)-phenyl | 1-Amino-4,6-disulfo-8-naphthol | Methyl | ß-Sulfatoethyl | rot |
| 46 | dito | dito | Ethyl | Ethyl | rot |
| 47 | dito | 1-Amino-3,6-disulfo-8-naphthol | Methyl | ß-Sulfatoethyl | blaust. rot |
| 48 | dito | dito | Wasserstoff | dito | dito |
| 49 | 3-(ß-Sulfatoethylsulfonyl)-phenyl | dito | Wasserstoff | dito | dito |
| 50 | dito | 2-Amino-6-sulfo-8-naphthol | Wasserstoff | dito | gelbst. rot |
| 51 | 4-(ß-Sulfatoethylsulfonyl)-phenyl | dito | Wasserstoff | dito | dito |
| 52 | 6-Sulfo-8-(ß-sulfatoethylsulfonyl)-naphth-2-yl | 2-Amino-6-sulfo-8-naphthol | Wasserstoff | Ethyl | gelbst. rot |
| 53 | 2-Methoxy-4-(ß-sulfatoethylsulfonyl)-phenyl | 3-Methyl-6-sulfo-8-naphthol | Methyl | ß-Sulfatoethyl | dito |
| 54 | 2,4-Dimethoxy-5-(ß-sulfatoethylsulfonyl)-phenyl | dito | Methyl | dito | dito |

Verbindung der Formel (A) mit

| Bsp. | D gleich ... | Aminonaphthol-sulfonsäure | R' gleich ... | R" gleich ... | Farbton |
|---|---|---|---|---|---|
| 55 | 2-Sulfo-4-ethoxy-phenyl | 3-Methylamino-6-sulfo-8-naphthol | Methyl | ß-Sulfatoethyl | gelbst. rot (505) |
| 56 | 6,8-Disulfo-naphth-2-yl | 3-Amino-6-sulfo-8-naphthol | Methyl | dito | gelbst. rot (497) |
| 57 | 4,6,8-Trisulfo-naphth-2-yl | dito | Methyl | dito | gelbst. rot (493) |
| 58 | 4,8-Disulfo-naphth-2-yl | dito | Methyl | dito | gelbst. rot (495) |
| 59 | 2-Sulfo-phenyl | 1-Amino-3,6-di-sulfo-8-naphthol | Methyl | Methyl | rot (511) |
| 60 | 1,5-Disulfo-naphth-2-yl | dito | Methyl | Methyl | rot (540) |

Beispiel 61

Zur Herstellung einer erfindungsgemäßen Monoazoverbindung verfährt man gemäß der Verfahrensweise des Beispieles 1, setzt jedoch anstelle von 3-Amino-6-sulfo-8-naphthol die äquivalente Menge an 3-Methylamino-6-sulfo-8-naphthol ein.

Das erfindungsgemäße Alkalimetallsalz der Verbindung der Formel

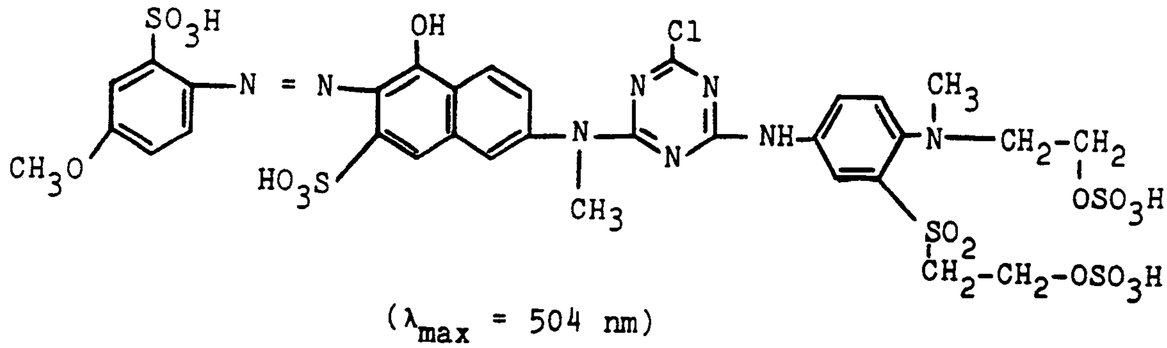

($\lambda_{max}$ = 504 nm)

besitzt sehr gute faserreaktive Farbstoffeigenschaften und liefert insbesondere auf Cellulosefasermaterialien farbstarke, gelbstichig rote Färbungen und Druck mit guten Echtheitseigenschaften, von denen insbesondere die guten Wasch-, Schweiß-, Chlor- und Naßlichtechtheiten, hiervon insbesondere die gute Schweißlichtechtheit, hervorgehoben werden können.

Beispiel 62

Zur Herstellung einer erfindungsgemäßen Monoazoverbindung verfährt man gemäß der Verfahrensweise des Beispiels 1, setzt jedoch anstelle von 2-Sulfo-4-methoxy-anilin als Diazokomponente die äquivalente Menge an 2-Sulfo-anilin ein.

Das erfindungsgemäße Alkalimetallsalz der Verbindung der Formel

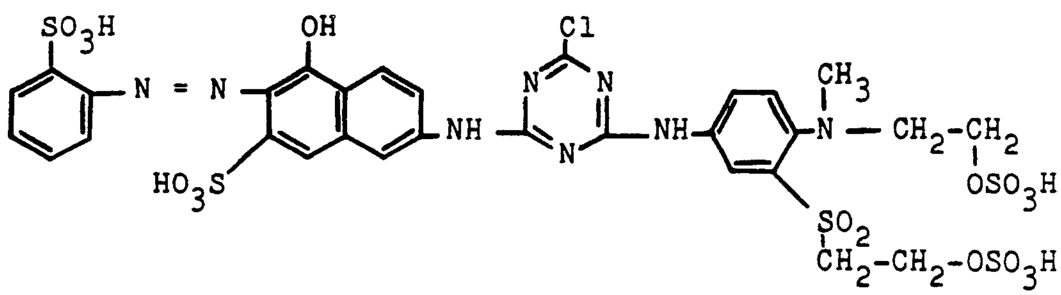

($\lambda_{max}$ = 480 nm)

besitzt sehr gute Wasserlöslichkeit und sehr gute Farbstoffeigenschaften und liefert insbesondere auf Cellulosefasermaterialien nach den in der Technik für faserreaktive Farbstoffe üblichen Applikations- und Fixierverfahren farbstarke, rotstichig gelbe Färbungen mit guten Echteitseigenschaften, von denen insbesondere die guten Naßlichtechtheiten, wie Schweißlichtechtheiten, und die gute Chlorwasserechtheit hervorgehoben werden können.

Beispiel 63

Zur Herstellung einer erfindungsgemäßen Monoazoverbindung verfährt man gemäß der Verfahrensweise des Beispiels 4, setzt jedoch anstelle von 1,5-Disulfo-2-amino-naphthalin als Diazokomponente die äquivalente Menge an 1,6-Disulfo-2-amino-naphthalin ein. Die erhaltene erfindungsgemäße Alkalimetallverbindung zeigt in Wasser ein Absorptionsmaximum bei 491 nm und liefert insbesondere Cellulosefasermaterialien infolge ihrer guten Farbstoffeigenschaften farbstarke, rotstichig orange Färbungen und Drucke mit guten Echtheitseigenschaften, von denen insbesondere die gute Chlorwasserechtheit hervorgehoben werden kann.

Beispiel 64

Zur Herstellung einer erfindungsgemäßen Monoazoverbindung verfährt man gemäß der Verfahrensweise des Beispiels 4, setzt jedoch anstelle von 1,5-Disulfo-2-amino-naphthalin als Diazokomponente die äquivalente Menge an 3,6,8-Trisulfo-2-amino-naphthalin ein. Die erhaltene erfindungsgemäße Alkalimetallverbindung zeigt in Wasser ein Absorptionsmaximum bei 496 nm und liefert insbesondere Cellulosefasermaterialien infolge ihrer guten Farbstoffeigenschaften farbstarke, rotstichig orange Färbungen und Drucke mit guten Echtheitseigenschaften, von denen insbesondere die gute Chlorwasserechtheit hervorgehoben werden kann.

**Patentansprüche für die Vertragsstaaten: BE CH DE FR GB IT LI**

1. Eine wasserlösliche Monoazoverbindung, die der allgemeinen Formel (1)

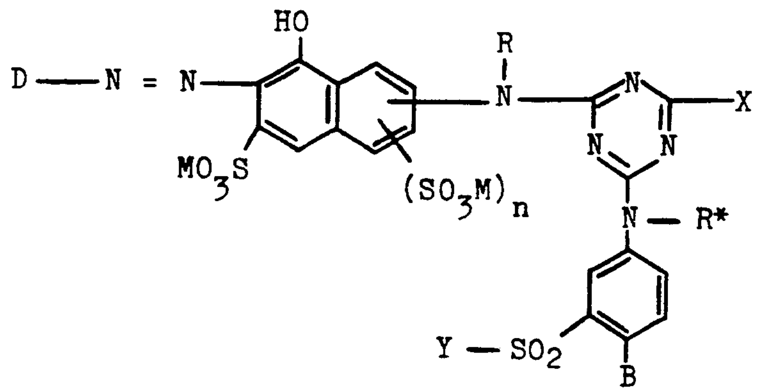

(1)

entspricht, in welcher bedeuten:

D ist ein Napthylrest, der durch 1, 2 oder 3 Sulfogruppen oder durch eine Gruppe der allgemeinen Formel $Y-SO_2-$ mit Y der nachstehend genannten Bedeutung oder durch eine solche Gruppe $Y-SO_2-$ und 1 oder 2 Sulfogruppen substituiert ist, oder ist ein Rest der allgemeinen Formel (2a) oder (2b)

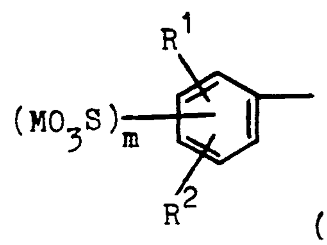

(2a)

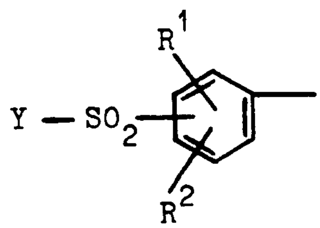

(2b)

in welchen

M und Y die nachstehend angegebenen Bedeutungen haben,

m für die Zahl Null oder 1 steht,

$R^1$ ein Wasserstoffatom, eine Alkylgruppe von 1 bis 4 C-Atomen, eine Alkoxygruppe von 1 bis 4 C-Atomen oder eine Carboxygruppe und

$R^2$ ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder ein Halogenatom ist;

n steht für die Zahl Null oder 1;

R ist ein Wasserstoffatom oder eine Alkylgruppe von 1 bis 4 C-Atomen, die substituiert sein kann, und

R* ist ein Wasserstoffatom oder eine Alkylgruppe von 1 bis 4 C-Atomen, die substituiert sein kann, wobei R und R* zueinander gleich oder voneinander verschiedene Bedeutungen besitzen können;

X ist ein Fluoratom oder ein Chloratom;

B ist eine Gruppe der allgemeinen Formel (3a) oder (3b)

$-S-R^3$

(3b)

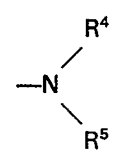

(3c)

in welchen

$R^3$ ein Wasserstoffatom oder eine Alkylgruppe von 1 bis 4 C-Atomen ist, die substituiert sein kann, oder ein gegebenenfalls substituierter Arylrest ist,

$R^4$ ein Wasserstoffatom oder eine Alkylgruppe von 1 bis 8 C-Atomen, die substituiert sein kann, oder eine Cycloalkylgruppe von 5 bis 8 C-Atomen mit gegebenenfalls 1 bis 3 Methylgruppen und/oder einer Aminogruppe, Alkanoylaminogruppe von 2 bis 5 C-Atomen oder Benzoylaminogruppe als Substituenten ist oder der Phenylrest ist, der durch 1, 2 oder 3 Substituenten aus der Gruppe Sulfo, Carboxy, Halogen, Alkyl von 1 bis 4 C-Atomen, Alkoxy von 1 bis 4 C-Atomen, Nitro, eine Gruppe der Formel $-SO_2-Y'$ (worin Y' eine der nachstehend angegebenen Bedeutungen von Y hat oder eine β-Hydroxyethyl-Gruppe ist), Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen und Benzoylamino substituiert sein kann, oder ein

Naphthylrest ist, der durch 1, 2 oder 3 Sulfogruppen und/oder eine Gruppe der Formel —$SO_2$—Y' (mit Y' der obengenannten Bedeutung) substituiert sein kann, und

$R^5$ eine der für $R^4$ angegebenen Bedeutungen besitzt wobei $R^5$ zu $R^4$ gleich oder von $R^4$ verschieden ist, oder

$R^4$ und $R^5$ zusammen mit dem Stickstoffatom und einem, zwei oder drei Alkylenresten von 1 bis 5 C-Atomen und gegebenenfalls einem oder zwei weiteren Heteroatomen einen 5- bis 8-gliedrigen heterocyclischen Rest bilden;

Y ist eine β-Thiosulfatoethyl-, β-Phosphatoethyl-, β-Chlorethyl-, Vinyl- oder β-Sulfatoethyl-Gruppe; die Y können zueinander gleich oder voneinander verschiedene Bedeutungen haben;

M ist ein Wasserstoffatom oder ein Alkalimetall oder das Äquivalent eines Erdalkalimetalls.

2. Verbindung nach Anspruch 1, dadurch gekennzeichnet, daß

$R^3$ ein Wasserstoffatom oder eine Alkylgruppe von 1 bis 4 C-Atomen ist, die durch einen Substituenten aus der Gruppe Alkoxy von 1 bis 4 C-Atomen, Sulfo, Carboxy, Hydroxy, Alkanoyloxy von 2 bis 5 C-Atomen, Sulfato, Phenyl und durch Sulfo, Carboxy, Methyl, Methoxy, Ethoxy und/oder Chlor substituiertes Phenyl substituiert sein kann, oder daß

$R^4$ ein Wasserstoffatom oder eine Alkylgruppe von 1 bis 4 C-Atomen ist, die durch 1 oder 2 Substituenten aus der Gruppe Sulfo, Carboxy, Sulfato, Phosphato, Alkoxy von 1 bis 4 C-Atomen, Hydroxy, Alkanoyloxy von 2 bis 5 C-Atomen, Phenyl und durch Sulfo, Carboxy, Methyl, Methoxy, Ethoxy und/oder Chlor substituiertes Phenyl substituiert sein kann, oder eine Cyclopentyl- oder Cyclohexylgruppe ist, die durch 1 bis 3 Methylgruppen substituiert sein können, und

$R^5$ ein Wasserstoffatom oder eine Alkylgruppe von 1 bis 4 C-Atomen ist, die durch 1 oder 2 Substituenten aus der Gruppe Sulfo, Carboxy, Sulfato, Phosphato, Alkoxy von 1 bis 4 C-Atomen, Hydroxy, Alkanoyloxy von 2 bis 5 C-Atomen, Phenyl und durch Sulfo, Carboxy, Methyl, Methoxy, Ethoxy und/oder Chlor substituiertes Phenyl substituiert sein kann, oder der Phenylrest ist, der durch 1 oder 2 Substituenten aus der Gruppe Sulfo, Carboxy, Methyl, Methoxy, Ethoxy, Nitro und Acetylamino substituiert sein kann, oder ein Naphthylrest ist, der durch 1, 2 oder 3 Sulfogruppen substituiert sein kann,

wobei $R^5$ eine zu $R^4$ gleiche oder von $R^4$ verschiedene Bedeutung haben kann, oder $R^4$ und $R^5$ zusammen mit dem Stickstoffatom den Piperidino-, Piperazino- oder Morpholinorest bilden.

3. Verbindung nach Anspruch 1 oder 2, dadurch gekennzeichnet, daß D eine Gruppe der allgemeinen Formel (2a)

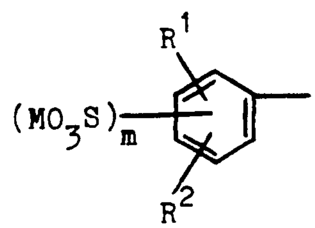

(2a)

ist, in welcher

M und m die in Anspruch 1 genannten Bedeutungen haben,

$R^1$ ein Wasserstoffatom, eine Alkylgruppe von 1 bis 4 C-Atomen, eine Alkoxygruppe von 1 bis 4 C-Atomen oder eine Carboxygruppe ist und

$R^2$ ein Wasserstoffatom, eine Alkylgruppe von 1 bis 4 C-Atomen, eine Alkoxygruppe von 1 bis 4 C-Atomen, eine Sulfogruppe oder ein Halogenatom ist,

oder daß D ein durch 1, 2 oder 3 Sulfogruppen substituierter Naphth-2-yl-Rest ist.

4. Verbindung nach Anspruch 1 oder 2, dadurch gekennzeichnet, daß D eine Gruppe der allgemeinen Formel (2b)

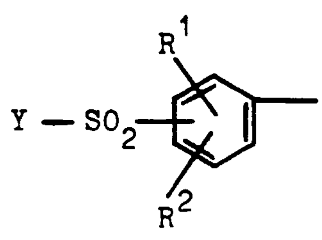

(2b)

ist, in welcher

M und Y die in Anspruch 1 genannten Bedeutungen haben,

$R^1$ ein Wasserstoffatom, eine Alkylgruppe von 1 bis 4 C-Atomen, eine Alkoxygruppe von 1 bis 4 C-Atomen oder eine Carboxygruppe ist und

$R^2$ ein Wasserstoffatom, eine Alkylgruppe von 1 bis 4 C-Atomen, eine Alkoxygruppe von 1 bis 4 C-Atomen, eine Sulfogruppe oder ein Halogenatom ist,

oder daß D ein Naphtyl-2-yl-Rest, der durch eine Gruppe der allgemeinen Formel Y—$SO_2$— mit Y der obengenanten Bedeutung oder durch eine solche Gruppe Y—$SO_2$— und 1 oder 2 Sulfogruppen substituiert ist.

5. Verbindung nach Anspruch 1 oder 2, dadurch gekennzeichnet, daß D eine Gruppe der allgemeinen

Formel (2a) ist, in welcher $R^1$ ein Wasserstoffatom, eine Methyl-, Ethyl-, Methoxy- oder Ethoxygruppe bedeutet und $R^2$ ein Wasserstoffatom, eine Methoxy-, Ethoxy- oder Sulfogruppe oder ein Chloratom ist.

6. Verbindung nach Anspruch 1 oder 2, dadurch gekennzeichnet, daß D eine Gruppe der allgemeinen Formel (2b) ist, in welcher $R^1$ ein Wasserstoffatom, eine Methyl-, Ethyl-, Methoxy- oder Ethoxygruppe ist und $R^2$ ein Wasserstoffatom, eine Methoxy-, Ethoxy- oder Sulfogruppe bedeutet.

7. Verbindung nach mindestens einem der Ansprüche 1 bis 6, dadurch gekennzeichnet, daß R ein Wasserstoffatom, eine Methyl- oder Ethylgruppe ist.

8. Verbindung nach mindestens einem der Ansprüche 1 bis 7, dadurch gekennzeichnet, daß R* ein Wasserstoffatom ist.

9. Verbindung nach mindestens einem der Ansprüche 1 bis 8, dadurch gekennzeichnet, daß X ein Chloratom ist.

10. Verbindung nach mindestens einem der Ansprüche 1 und 3 bis 9, dadurch gekennzeichnet, daß $R^4$ ein Wasserstoffatom, eine Methylgruppe oder eine Ethylgruppe und $R^5$ ein Wasserstoffatom oder eine Alkylgruppe von 1 bis 4 C-Atomen oder eine durch eine oder zwei Sulfatogruppen oder eine Sulfo- oder eine Carboxygruppe substituierte Alkylgruppe von 2 bis 4 C-Atomen oder eine Phenylgruppe ist, die durch 1 oder 2 Substituenten aus der Gruppe 2 Sulfo, 1 Alkyl von 1 bis 4 C-Atomen, 1 Alkoxy von 1 bis 4 C-Atomen und 1 Chlor substituiert sein kann.

11. Verbindung nach mindestens einem der Ansprüche 1 und 3 bis 9, dadurch gekennzeichnet, daß B eine Aminogruppe der allgemeinen Formel $-NR^4R^5$ ist.

12. Verbindung nach Anspruch 11, dadurch gekennzeichnet, daß $R^4$ und $R^5$ die in Anspruch 2 oder 10 genannten Bedeutungen haben.

13. Verbindung nach mindestens einem der Ansprüche 1 bis 12, dadurch gekennzeichnet, daß Y eine β-Sulfatoethyl-Gruppe ist.

14. Verbindung nach mindestens einem der Ansprüche 1 bis 13, dadurch gekennzeichnet, daß M ein Wasserstoffatom oder ein Alkalimetall ist.

15. Verbindung nach Anspruch 1 entsprechend der allgemeinen Formel (1a)

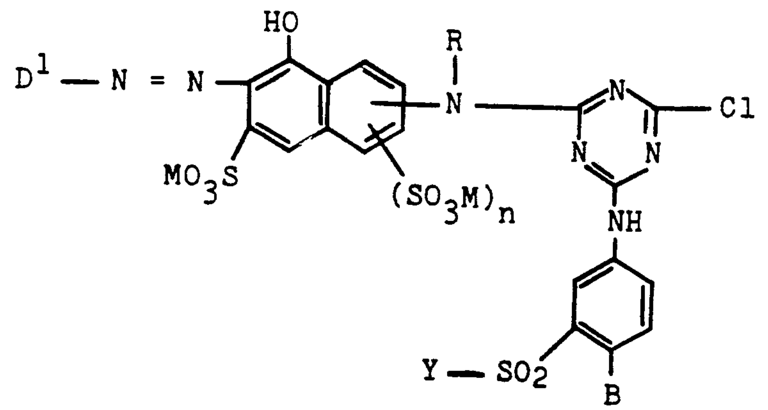

(1a)

in welcher $D^1$ ein Phenylrest der allgemeinen Formel (2a) ist, in welcher $R^1$, $R^2$, M und m eine der in den vorhergehenden Ansprüchen genannten Bedeutungen besitzen, oder ein durch 1, 2 oder 3 Sulfogruppen substituierter Naphth-2-yl-Rest ist, R für ein Wasserstoffatom oder eine Methyl- oder Ethylgruppe steht und M, n, B und Y eine der in den vorhergehenden Ansprüchen genannten Bedeutungen haben.

16. Verbindung nach Anspruch 1 entsprechend der allgemeinen Formel (1b)

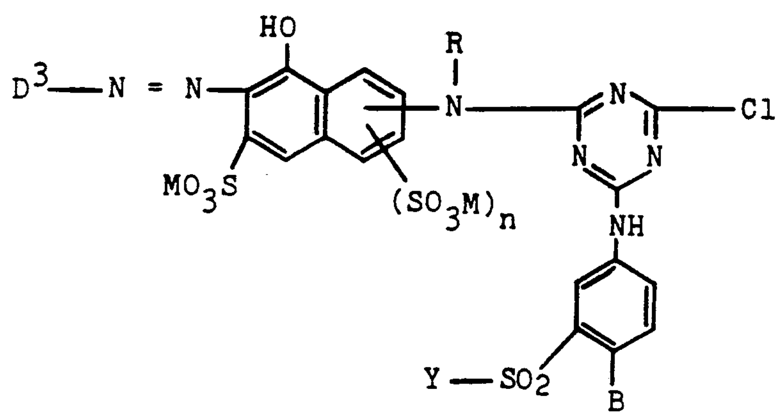

(1b)

in welcher $D^3$ ein Phenylrest der allgemeinen Formel (2b) ist, in welcher $R^1$, $R^2$ und Y eine der in den vorgehenden Ansprüchen genannten Bedeutungen haben, oder ein Naphth-2-yl-Rest ist, der durch eine

Gruppe der allgemeinen Formel Y—$SO_2$— mit Y einer der in den vorhergehenden Patentansprüchen genannten Bedeutungen oder durch eine solche Gruppe Y—$SO_2$— und eine oder zwei Sulfogruppe substituiert ist, und M, Y, n und B eine der in den vorhergehenden Ansprüchen genannten Bedeutungen haben.

17. Verfahren zur Herstellung einer Monoazoverbindung der in Anspruch 1 genannten und definierten allgemeinen Formel (1), dadurch gekennzeichnet, daß man eine Monoazoverbindung der allgemeinen Formel (4)

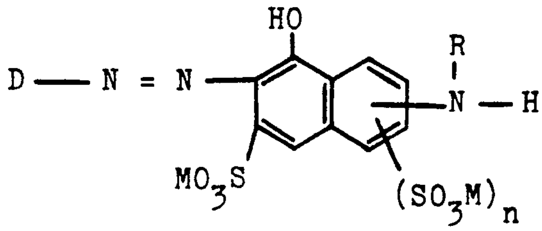

(4)

in welcher D, M, R und n die in Anspruch 1 genannten Bedeutungen haben, und ein aromatisches Amin der allgemeinen Formel (5)

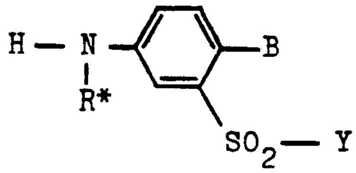

(5)

in welcher B, R* und Y die in Anspruch 1 genannten Bedeutungen haben, mit 2,4,6-Trichlor-s-triazin oder 2,4,6-Trifluor-s-triazin in beliebiger Reihenfolge oder gegebenenfalls gleichzeitig umsetzt, oder daß man eine Monohalogen-triazinylamino-naphtholsulfonsäure-Verbindung der allgemienen Formel (8)

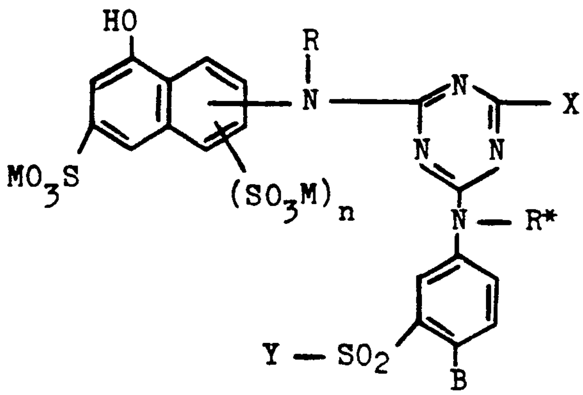

(8)

in welcher B, M, n, R, R*, X und Y die in Anspruch 1 genannten Bedeutungen haben, mit einer Diazoniumverbindung eines aromatischen Amins der allgemeinen Formel (9)

$$D\text{—}NH_2 \qquad (9)$$

in welcher D eine der in Anspruch 1 genannten Bedeutungen hat, kuppelt.

18. Verwendung einer Monoazoverbindung von mindestens einem der Ansprüche 1 bis 16 als Farbstoff.

19. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder ihn in das Material einbringt und ihn mittels Wärme und/oder mittels eines säurebindenden Mittels fixiert, dadurch gekennzeichnet, daß man als Farbstoff eine Verbindung von mindestens einem der Ansprüche 1 bis 16 einsetzt.

**Patentansprüche für den Vertragsstaat: ES**

1. Verfahren zur Herstellung einer wasserlöslichen Monoazoverbindung, die der allgemeinen Formel (1)

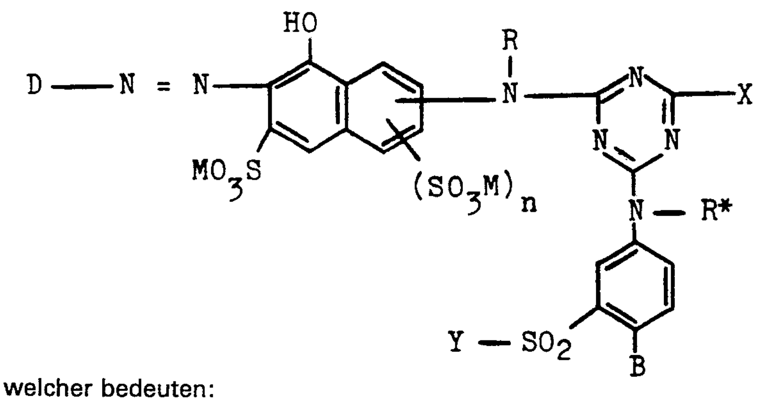

(1)

entspricht, in welcher bedeuten:

D ist ein Napthylrest, der durch 1, 2 oder 3 Sulfogruppen oder durch eine Gruppe der allgemeinen Formel $Y—SO_2—$ mit Y der nachstehend genannten Bedeutung oder durch eine solche Gruppe $Y—SO_2—$ und 1 oder 2 Sulfogruppen substituiert ist, oder ist ein Rest der allgemeinen Formel (2a) oder (2b)

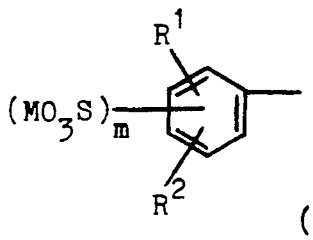

(2a)

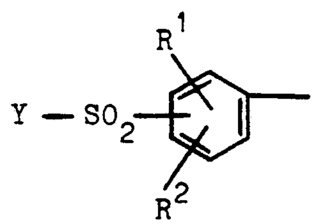

(2b)

in welchen

M und Y die nachstehend angegebenen Bedeutungen haben,

m für die Zahl Null oder 1 steht,

$R^1$ ein Wasserstoffatom, eine Alkylgruppe von 1 bis 4 C-Atomen, eine Alkoxygruppe von 1 bis 4 C-Atomen oder eine Carboxygruppe und

$R^2$ ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder ein Halogenatom ist;

n steht für die Zahl Null oder 1;

R ist jedes ein Wasserstoffatom oder eine Alkylgruppe von 1 bis 4 C-Atomen, die substituiert sein kann, und

R* ist jedes ein Wasserstoffatom oder eine Alkylgruppe von 1 bis 4 C-Atomen, die substituiert sein kann,

wobei R und R* zueinander gleich oder voneinander verschiedene Bedeutungen besitzen können;

X ist ein Fluoratom oder ein Chloratom;

B ist eine Gruppe der allgemeinen Formel (3a) oder (3b)

$—S—R^3$

(3b)

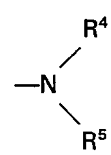

(3c)

in welchen

$R^3$ ein Wasserstoffatom oder eine Alkylgruppe von 1 bis 4 C-Atomen ist, die substituiert sein kann, oder ein gegebenenfalls substituierter Arylrest ist,

$R^4$ ein Wasserstoffatom oder eine Alkylgruppe von 1 bis 8 C-Atomen, die substituiert sein kann, oder eine Cycloalkylgruppe von 5 bis 8 C-Atomen mit gegebenenfalls 1 bis 3 Methylgruppen und/oder einer Aminogruppe, Alkanoylaminogruppe von 2 bis 5 C-Atomen oder Benzoylaminogruppe als Substituenten ist oder der Phenylrest ist, der durch 1, 2 oder 3 Substituenten aus der Gruppe Sulfo, Carboxy, Halogen, Alkyl von 1 bis 4 C-Atomen, Alkoxy von 1 bis 4 C-Atomen, Nitro, eine Gruppe der Formel $—SO_2—Y'$ (worin Y' eine der nachstehend angegebenen Bedeutungen von Y hat oder eine β-Hydroxyethyl-Gruppe ist),

Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen und Benzoylamino substituiert sein kann, oder ein Naphthylrest ist, der durch 1, 2 oder 3 Sulfogruppen und/oder eine Gruppe der Formel —$SO_2$—Y' (mit Y' der obengenannten Bedeutung) substituiert sein kann, und

$R^5$ eine der für $R^4$ angegebenen Bedeutungen besitzt wobei $R^5$ zu $R^4$ gleich oder von $R^4$ verschieden ist, oder

$R^4$ und $R^5$ zusammen mit dem Stickstoffatom und einem, zwei oder drei Alkylenresten von 1 bis 5 C-Atomen und gegebenenfalls einem oder zwei weiteren Heteroatomen einen 5- bis 8-gliedrigen heterocyclischen Rest bilden;

Y ist eine β-Thiosulfatoethyl-, β-Phosphatoethyl-, β-Chlorethyl-, Vinyl- oder β-Sulfatoethyl-Gruppe; die Y können zueinander gleich oder voneinander verschiedene Bedeutungen haben;

M ist ein Wasserstoffatom oder ein Alkalimetall oder das Äquivalent eines Erdalkalimetalls, dadurch gekennzeichnet, daß man eine Monoazoverbindung der allgemeinen Formel (4)

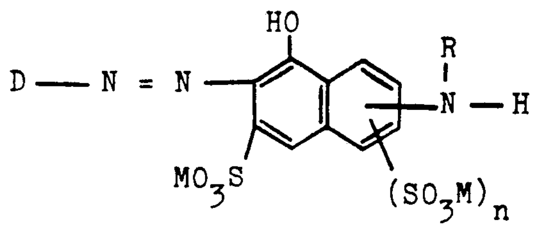

(4)

in welcher D, M, R und n die oben genannten Bedeutungen haben, und ein aromatisches Amin der allgemeinen Formel (5)

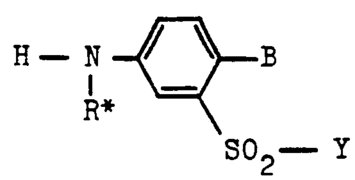

(5)

in welcher B, R* und Y die oben genannten Bedeutungen haben, mit 2,4,6-Trichlor-s-triazin oder 2,4,6-Trifluor-s-triazin in beliebiger Reihenfolge oder gegebenenfalls gleichzeitig umsetzt, oder daß man eine Monohalogen-triazinylamino-naphtholsulfonsäure-Verbindung der allgemienen Formel (8)

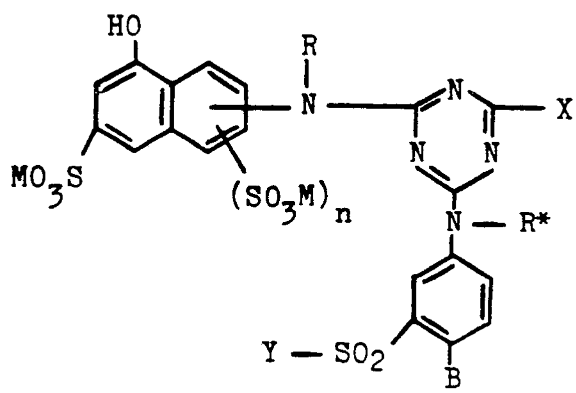

(8)

in welcher B, M, n, R, R*, X und Y die oben genannten Bedeutungen haben, mit einer Diazoniumverbindung eines aromatischen Amins der allgemeinen Formel (9)

$$D{-}NH_2 \qquad (9)$$

in welcher D eine der oben genannten Bedeutungen hat, kuppelt.

2. Verfahren nach Anspruch 1, dadurch gekennzeichnet, daß

$R^3$ ein Wasserstoffatom oder eine Alkylgruppe von 1 bis 4 C-Atomen ist, die durch einen Substituenten aus der Gruppe Alkoxy von 1 bis 4 C-Atomen, Sulfo, Carboxy, Hydroxy, Alkanoyloxy von 2 bis 5 C-Atomen, Sulfato, Phenyl und durch Sulfo, Carboxy, Methyl, Methoxy, Ethoxy und/oder Chlor substituiertes Phenyl substituiert sein kann, oder daß

$R^4$ ein Wasserstoffatom oder eine Alkylgruppe von 1 bis 4 C-Atomen ist, die durch 1 oder 2 Substituenten aus der Gruppe Sulfo, Carboxy, Sulfato, Phosphato, Alkoxy von 1 bis 4 C-Atomen, Hydroxy, Alkanoyloxy von 2 bis 5 C-Atomen, Phenyl und durch Sulfo, Carboxy, Methyl, Methoxy, Ethoxy und/oder Chlor substituiertes Phenyl substituiert sein kann, oder eine Cyclopentyl- oder Cyclohexylgruppe ist, die durch 1 bis 3 Methylgruppen substituiert sein können, und

$R^5$ ein Wasserstoffatom oder eine Alkylgruppe von 1 bis 4 C-Atomen ist, die durch 1 oder 2

Substituenten aus der Gruppe Sulfo, Carboxy, Sulfato, Phosphato, Alkoxy von 1 bis 4 C-Atomen, Hydroxy, Alkanoyloxy von 2 bis 5 C-Atomen, Phenyl und durch Sulfo, Carboxy, Methyl, Methoxy, Ethoxy und/oder Chlor substituiertes Phenyl substituiert sein kann, oder der Phenylrest ist, der durch 1 oder 2 Substituenten aus der Gruppe Sulfo, Carboxy, Methyl, Methoxy, Ethoxy, Nitro und Acetylamino substituiert sein kann, oder ein Naphthylrest ist, der durch 1, 2 oder 3 Sulfogruppen substituiert sein kann,
wobei $R^5$ eine zu $R^4$ gleiche oder von $R^4$ verschiedene Bedeutung haben kann, oder $R^4$ und $R^5$ zusammen mit dem Stickstoffatom den Piperidino-, Piperazino- oder Morpholinorest bilden.

3. Verfahren nach Anspruch 1 oder 2, dadurch gekennzeichnet, daß D eine Gruppe der allgemeinen Formel (2a)

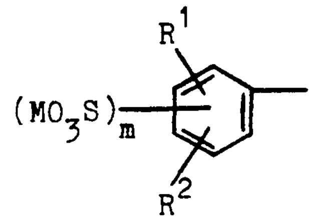
(2a)

ist, in welcher
M und m die in Anspruch 1 genannten Bedeutungen haben,
$R^1$ ein Wasserstoffatom, eine Alkylgruppe von 1 bis 4 C-Atomen, eine Alkoxygruppe von 1 bis 4 C-Atomen oder eine Carboxygruppe ist und
$R^2$ ein Wasserstoffatom, eine Alkylgruppe von 1 bis 4 C-Atomen, eine Alkoxygruppe von 1 bis 4 C-Atomen, eine Sulfogruppe oder ein Halogenatom ist,
oder daß D ein durch 1, 2 oder 3 Sulfogruppen substituierter Naphth-2-yl-Rest ist.

4. Verfahren nach Anspruch 1 oder 2, dadurch gekennzeichnet, daß D eine Gruppe der allgemeinen Formel (2b)

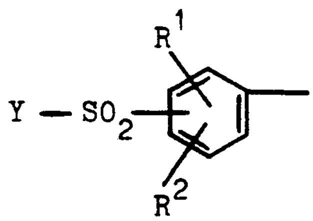
(2b)

ist, in welcher
M und Y die in Anspruch 1 genannten Bedeutungen haben,
$R^1$ ein Wasserstoffatom, eine Alkylgruppe von 1 bis 4 C-Atomen, eine Alkoxygruppe von 1 bis 4 C-Atomen oder eine Carboxygruppe ist und
$R^2$ ein Wasserstoffatom, eine Alkylgruppe von 1 bis 4 C-Atomen, eine Alkoxygruppe von 1 bis 4 C-Atomen, eine Sulfogruppe oder ein Halogenatom ist,
oder daß D ein Naphtyl-2-yl-Rest, der durch eine Gruppe der allgemeinen Formel $Y—SO_2—$ mit Y der obengenanten Bedeutung oder durch eine solche Gruppe $Y—SO_2—$ und 1 oder 2 Sulfogruppen substituiert ist.

5. Verfahren nach Anspruch 1 oder 2, dadurch gekennzeichnet, daß D eine Gruppe der allgemeinen Formel (2a) ist, in welcher $R^1$ ein Wasserstoffatom, eine Methyl-, Ethyl-, Methoxy- oder Ethoxygruppe bedeutet und $R^2$ ein Wasserstoffatom, eine Methoxy-, Ethoxy- oder Sulfogruppe oder ein Chloratom ist.

6. Verfahren nach Anspruch 1 oder 2, dadurch gekennzeichnet, daß D eine Gruppe der allgemeinen Formel (2b) ist, in welcher $R^1$ ein Wasserstoffatom, eine Methyl-, Ethyl-, Methoxy- oder Ethoxygruppe ist und $R^2$ ein Wasserstoffatom, eine Methoxy-, Ethoxy- oder Sulfogruppe bedeutet.

7. Verfahren nach mindestens einem der Ansprüche 1 bis 6, dadurch gekennzeichnet, daß R ein Wasserstoffatom, eine Methyl- oder Ethylgruppe ist.

8. Verfahren nach mindestens einem der Ansprüche 1 bis 7, dadurch gekennzeichnet, daß R* ein Wasserstoffatom ist.

9. Verfahren nach mindestens einem der Ansprüche 1 bis 8, dadurch gekennzeichnet, daß X ein Chloratom ist.

10. Verfahren nach mindestens einem der Ansprüche 1 und 3 bis 9, dadurch gekennzeichnet, daß $R^4$ ein Wasserstoffatom, eine Methylgruppe oder eine Ethylgruppe und $R^5$ ein Wasserstoffatom oder eine Alkylgruppe von 1 bis 4 C-Atomen oder eine durch eine oder zwei Sulfatogruppen oder eine Sulfo- oder eine Carboxygruppe substituierte Alkylgruppe von 2 bis 4 C-Atomen oder eine Phenylgruppe ist, die durch 1 oder 2 Substituenten aus der Gruppe 2 Sulfo, 1 Alkyl von 1 bis 4 C-Atomen, 1 Alkoxy von 1 bis 4 C-Atomen und 1 Chlor substituiert sein kann.

11. Verfahren nach mindestens einem der Ansprüche 1 und 3 bis 9, dadurch gekennzeichnet, daß B eine Aminogruppe der allgemeinen Formel $—NR^4R^5$ ist.

12. Verfahren nach Anspruch 11, dadurch gekennzeichnet, daß $R^4$ und $R^5$ die in Anspruch 2 oder 10 genannten Bedeutungen haben.

13. Verfahren nach mindestens einem der Ansprüche 1 bis 12, dadurch gekennzeichnet, daß Y eine β-Sulfatoethyl-Gruppe ist.

14. Verfahren nach mindestens einem der Ansprüche 1 bis 13, dadurch gekennzeichnet, daß M ein Wasserstoffatom oder ein Alkalimetall ist.

15. Verfahren nach Anspruch 1, dadurch gekennzeichnet, daß die Verbindung der allgemeinen Formel (1) eine Verbindung der allgemeinen Formel (1a)

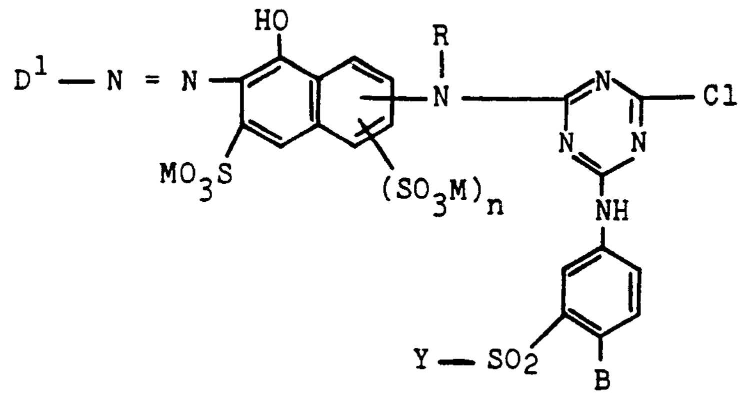

(1a)

ist, in welcher $D^1$ ein Phenylrest der allgemeinen Formel (2a) ist, in welcher $R^1$, $R^2$, M und m eine der in den vorhergehenden Ansprüchen genannten Bedeutungen besitzen, oder ein durch 1, 2 oder 3 Sulfogruppen substituierter Naphth-2-yl-Rest ist, R für ein Wasserstoffatom oder eine Methyl- oder Ethylgruppe steht und M, n, B und Y eine der in den vorhergehenden Ansprüchen genannten Bedeutungen haben.

16. Verfahren nach Anspruch 1, dadurch gekennzeichnet, daß die Verbindung der allgemeinen Formel (1) eine Verbindung der allgemeinen Formel (1b)

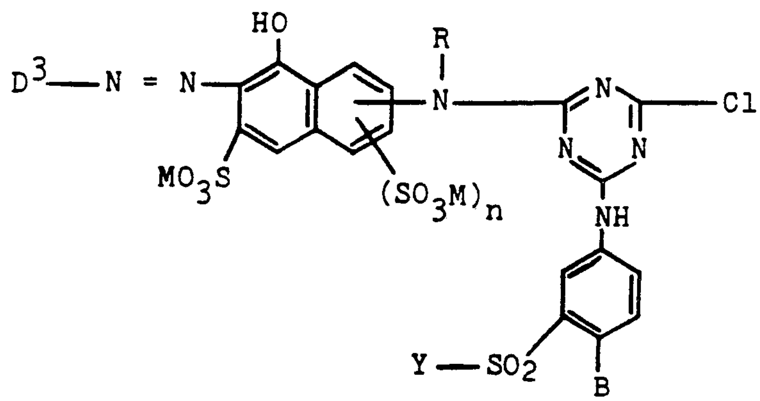

(1b)

ist, in welcher $D^3$ ein Phenylrest der allgemeinen Formel (2b) ist, in welcher $R^1$, $R^2$ und Y eine der in den vorgehenden Ansprüchen genannten Bedeutungen haben, oder ein Naphth-2-yl-Rest ist, der durch eine Gruppe der allgemeinen Formel $Y—SO_2—$ mit Y einer der in den vorhergehenden Patentansprüchen genannten Bedeutungen oder durch eine solche Gruppe $Y—SO_2—$ und eine oder zwei Sulfogruppe substituiert ist, und M, Y, n und B eine der in den vorhergehenden Ansprüchen genannten Bedeutungen haben.

17. Verwendung einer Monoazoverbindung von mindestens einem der Ansprüche 1 bis 16 als Farbstoff.

18. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder ihn in das Material einbringt und ihn mittels Wärme und/oder mittels eines säurebindenden Mittels fixiert, dadurch gekennzeichnet, daß man als Farbstoff eine Verbindung von mindestens einem der Ansprüche 1 bis 16 einsetzt.

**Revendications pour les Etats contractants: BE CH DE FR GB IT LI**

1. Composés monoazoïques solubles dans l'eau, de formule générale (1) ci-dessous

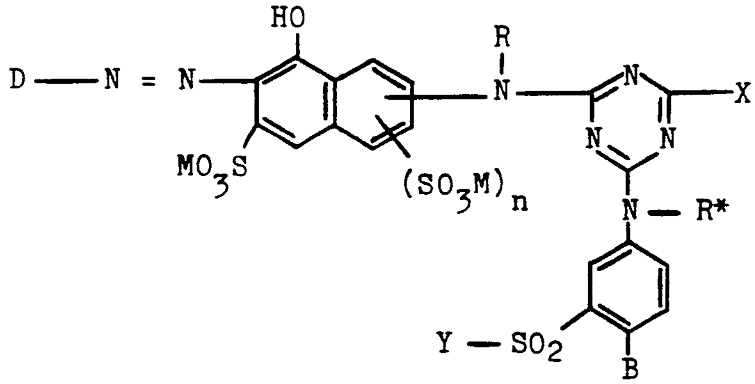

(1)

dans laquelle

D représente un radical naphtyle substitué par 1, 2 ou 3 groupes sulfo ou bien par un groupe $Y-SO_2-$, Y ayant la signification qui sera donnée ci-après, ou encore par un tel groupe $Y-SO_2-$ et 1 ou 2 groupes sulfo, ou bien D est un radical (2a) ou (2b) ci-dessous

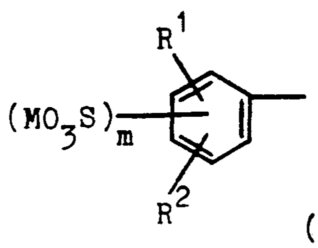

(2a)

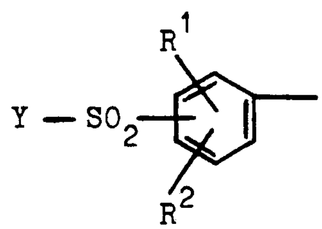

(2b)

dans lesquels

M et Y ont les significations indiquées ci-après,

m est le nombre 0 ou 1 (si m est nul il s'agit évidemment d'un atome d'hydrogène,

$R^1$ représente un atome d'hydrogène ou un alkyle ou un alcoxy en $C_1-C_4$ ou un groupe carboxy et

$R^2$ un atome d'hydrogène, un alkyle ou un alcoxy en $C_1-C_4$, un groupe sulfo ou carboxy, un aryle éventuellement substitué, un groupe hydroxy ou nitro ou un atome d'halogène,

n est le nombre 0 ou 1 (si n est nul, il s'agit d'un atome d'hydrogène),

R représente un atome d'hydrogène ou un a alkyle en $C_1-C_4$ éventuellement substitué, et

R* est un atome d'hydrogène ou un alkyle en $C_1-C_4$ éventuellement substitué,

R et R* pouvant être identiques ou différents l'un de l'autre;

X désigne un atome de fluor ou de préférence de chlore,

B un groupe de formule (3a) ou (3b) ci-dessous

$-S-R^3$

(3b)

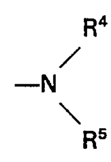

(3c)

dans lesquelles

$R^3$ est un atome d'hydrogène ou un alkyle en $C_1-C_4$ éventuellement substitué, ou un aryle éventuellement substitué,

$R^4$ est un atome d'hydrogène ou un alkyle en $C_1-C_8$ éventuellement substitué, ou bien un cycloalkyle en $C_5-C_8$ avec éventuellement de 1 à 3 groupes méthyle et/ou un groupe amino, alcanoylamino en $C_2-C_5$ ou benzoylamino comme substituants, ou le radical phényle avec 1, 2 ou 3 substituants de l'ensemble sulfo, carboxy, halogènes, alkyles en $C_1-C_4$, alcoxy en $C_1-C_4$, nitro, un groupe $-SO_2Y'$ (Y' ayant l'une des significations données ci-après pour Y ou étant un groupe β-hydroxyéthyle), alkylamino ou dialkylamino à alkyle en $C_1-C_4$, alcanoylamino en $C_2-C_5$ et benzoylamino éventuellement substitué, ou bien un radical naphtyle éventuellement substitué par 1, 2 ou 3 groupes sulfo et/ou un groupe $-SO_2Y'$ (Y' ayant la signification précédente), et

$R^5$ a l'une des significations indiquées pour $R^4$, $R^5$ et $R^4$ pouvant être identiques ou différents l'un de l'autre, ou bien

$R^4$ et $R^5$ forment ensemble avec l'atome d'azote et un, deux ou trois alkylènes en $C_1$—$C_5$ et le cas échéant un ou deux autres hétéroatomes, un radical hétérocyclique ayant de 5 à 8 chaînons.

Y est un groupe β-thiosulfatoéthyle, β-phosphatoéthyle, β-chloroéthyle, vinyle ou β-sulfatoéthyle; les Y pouvant être identiques ou différents l'un de l'autre; et

M représente un atome d'hydrogène ou un métal alcalin ou bien l'équivalent d'un métal alcalinoterreux.

2. Composés selon la revendication 1, caractérisés en ce que

$R^3$ est un atome d'hydrogène ou un alkyle en $C_1$—$C_4$ pouvant avoir un substituant pris parmi des alcoxy en $C_1$—$C_4$ et les groupes sulfo, carboxy, hydroxy, alcanoyloxy en $C_2$—$C_5$, sulfato, phényle et phényle substitué par sulfo, carboxy, méthyle, méthoxy, éthoxy et/ou du chlore, ou bien en ce que

$R^4$ est un atome d'hydrogène ou un alkyle en $C_1$—$C_4$ pouvant avoir 1 ou 2 substituants pris parmi les groupes sulfo, carboxy, sulfato, phosphato, alcoxy en $C_1$—$C_4$, hydroxy, alcanoyloxy en $C_2$—$C_5$, phényle et phényle substitué par sulfo, carboxy, méthyle, méthoxy, éthoxy et/ou du chlore, ou encore un groupe cyclopentyle et cyclohexyle pouvant avoir de 1 à 3 groupes méthyle, et

$R^5$ est un atome d'hydrogène ou un alkyle en $C_1$—$C_4$ pouvant avoir 1 ou 2 substituants pris parmi les groupes sulfo, carboxy, sulfato, phosphato, alcoxy en $C_1$—$C_4$, hydroxy, alcanoyloxy en $C_2$—$C_5$, phényle et phényle substitué par sulfo, carboxy, méthyle, méthoxy, éthoxy et/ou du chlore, ou bien $R^5$ est le radical phényle pouvant avoir de 1 à 2 substituants pris parmi les groupes sulfo, carboxy, méthyle, méthoxy, éthoxy, nitro et acétylamino, ou encore un radical naphtyle pouvant avoir de 1, 2 ou 3 groupes sulfo comme substituants,

$R^5$ pouvant être identique à $R^4$ ou différent de $R^4$, ou bien

$R^4$ et $R^5$ forment ensemble et avec l'atome d'azote le radical pipéridino, pipérazino ou morpholino.

3. Composés selon la revendication 1 ou 2, caractérisés en ce que D est un groupe de formule (2a)

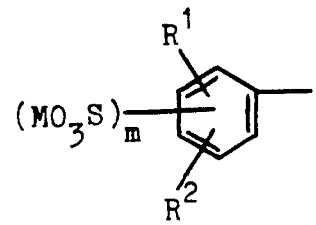

(2a)

dans laquelle

M et m ont les significations indiquées à la revendication 1,

$R^1$ représente un atome d'hydrogène, un alkyle ou un alcoxy en $C_1$—$C_4$ ou un groupe carboxy et

$R^2$ un atome d'hydrogène, un alkyle ou un alcoxy en $C_1$—$C_4$, un groupe sulfo ou un atome d'halogène, ou bien en ce que D est un radical naphtyle-2 avec 1, 2 ou 3 groupes sulfo comme substituants.

4. Composés selon la revendication 1 ou 2, caractérisés en ce que D est un groupe de formule (2b)

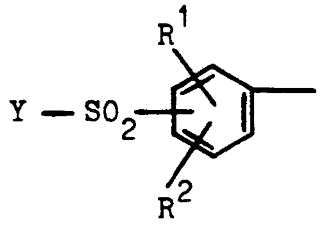

(2b)

dans laquelle

M et Y ont les significations indiquées à la revendication 1,

$R^1$ représente un atome d'hydrogène, un alkyle ou un alcoxy en $C_1$—$C_4$ ou un groupe carboxy et

$R^2$ un atome d'hydrogène, un alkyle ou un alcoxy en $C_1$—$C_4$, un groupe sulfo ou un atome d'halogène, ou bien en ce que D est un radical naphtyle-2 avec comme substituants un groupe $Y—SO_2—$, Y ayant la signification indiquée ci-dessus, ou bien un tel groupe $Y—SO_2—$ et 1 ou 2 groupes sulfo.

5. Composés selon la revendication 1 ou 2, caractérisés en ce que D est un groupe de formule (2a) dont $R^1$ est un atome d'hydrogène ou le groupe méthyle, éthyle, méthoxy ou éthoxy et $R^2$ un atome d'hydrogène, un groupe méthoxy, éthoxy ou sulfo ou un atome de chlore.

6. Composés selon la revendication 1 ou 2, caractérisés en ce que D est un groupe de formule (2b) dont $R^1$ est un atome d'hydrogène ou le groupe méthyle, éthyle, méthoxy ou éthoxy et $R^2$ un atome d'hydrogène ou un groupe méthoxy, éthoxy ou sulfo.

7. Composé selon une ou plusieurs des revendications 1 ou 6, caractérisé en ce que R est un atome d'hydrogène ou le groupe méthyle ou éthyle.

8. Composé selon une ou plusieurs des revendications 1 ou 7, caractérisé en ce que R* est un atome d'hydrogène.

9. Composé selon une ou plusieurs des revendications 1 ou 8, caractérisé en ce que X est un atome de chlore.

10. Composé selon une des revendications 1 et 3 à 9, caractérisé en ce que $R^4$ est un atome

d'hydrogène ou le groupe méthyle ou éthyle et $R^5$ un atome d'hydrogène, un alkyle en $C_1$—$C_4$ ou un alkyle en $C_2$—$C_4$ substitué par un ou deux groupes sulfato ou par un groupe sulfo ou un groupe carboxy, ou encore un groupe phényle pouvant avoir un ou deux substituants pris parmi 2 sulfo, 1 alkyle en $C_1$—$C_4$, 1 alcoxy en $C_1$—$C_4$ et 1 chlore.

11. Composé selon une des revendications 1 et 3 à 9, caractérisé en ce que B est un groupe amino —$NR^4R^5$.

12. Composé selon la revendication 11, caractérisé en ce que $R^4$ et $R^5$ ont les significations indiquées à la revendication 2 ou 10.

13. Composé selon une ou plusieurs des revendications 1 à 12, caractérisé en ce que Y est un groupe β-sulfatoéthyle.

14. Composé selon une ou plusieurs des revendications 1 à 13, caractérisé en ce que M est un atome d'hydrogène ou un métal alcalin.

15. Composés selon la revendication 1, de formule générale (1a)

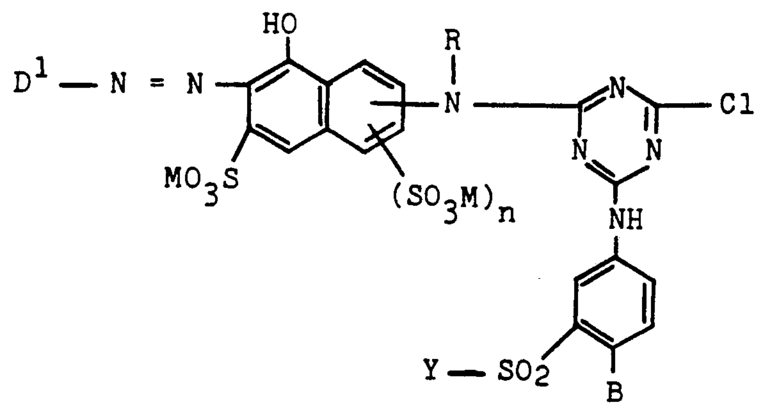

(1a)

dans laquelle $D^1$ est un radical phényle de formule (2a) dont $R^1$, $R^2$, M et m ont l'une des significations indiquées aux revendications précédentes, ou bien un radical naphtyle-2 portant 1, 2 ou 3 groupes sulfo comme substituants, R est un atome d'hydrogène ou le groupe méthyle ou éthyle et M, n B et Y ont l'une des significations indiquées aux revendications précédentes.

16. Composés selon la revendication 1, de formule générale (1b)

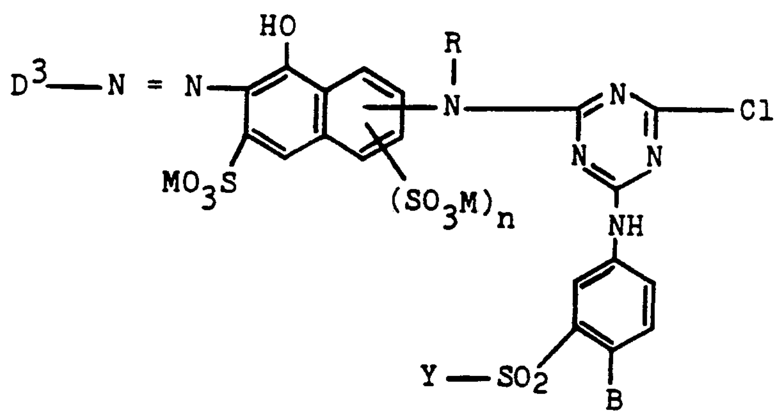

(1b)

dans laquelle $D^3$ un radical phényle de formule (2b) dont $R^1$, $R^2$ et Y ont l'une des significations indiquées aux revendications précédentes, ou bien un radical naphtyle-2 avec comme substituants un groupe Y—$SO_2$—, Y ayant l'une des significations indiquées aux revendications précédentes, ou bien un tel groupe Y—$SO_2$— et un ou deux groupes sulfo, et M, Y, n et B ont l'une des significations indiquées aux revendications précédentes.

17. Procédé de préparation des composés monoazoïques de formule générale (1) définie à la revendication 1, procédé caractérisé en ce que l'on fait réagir un composé monoazoïque de formule générale (4)

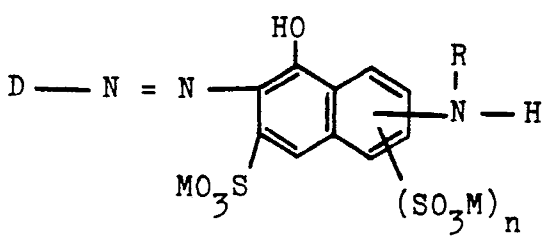

(4)

et une amine aromatique de formule (5)

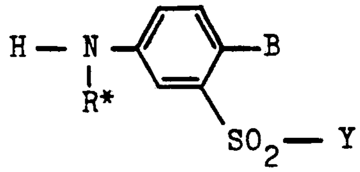

(5)

avec la 2,4,6-trichloro-s-triazine ou la 2,4,6-trifluoro-s-triazine dans un ordre quelconque ou le cas échéant en même temps, ou bien en ce que l'on copule un acide monohalogéno-triazinamino-naphtolsulfonique de formule générale (8)

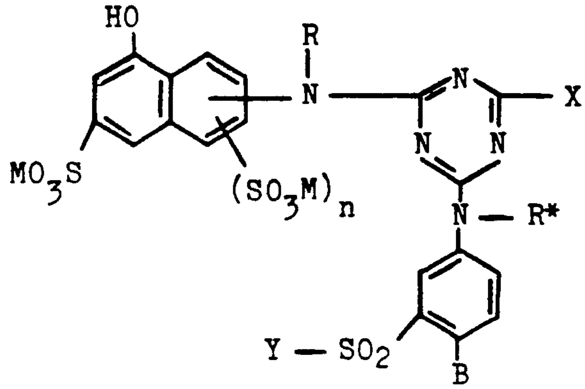

(8)

avec un composé de diazonium d'une amine aromatique de formule (9)

$$D—NH_2 \qquad (9)$$

18. L'emploi comme colorants des composés monoazoïques des revendications 1 à 16 précédentes.

19. Procédé de teinture (y compris l'impression) de matières à groupes hydroxyliques et/ou carboxamides, en particulier de matières fibreuses, par application d'un colorant sur ou dans la matière et fixage du colorant sous l'action de la chaleur et/ou d'un agent liant les acides, procédé caractérisé en ce que l'on utilise comme colorant un composé d'une ou plusieurs des revendications 1 à 16.

**Revendications pour l'Etat contractant: ES**

1. Procédé de préparation de composés monoazoïques solubles dans l'eau, de formule générale (1) ci-dessous

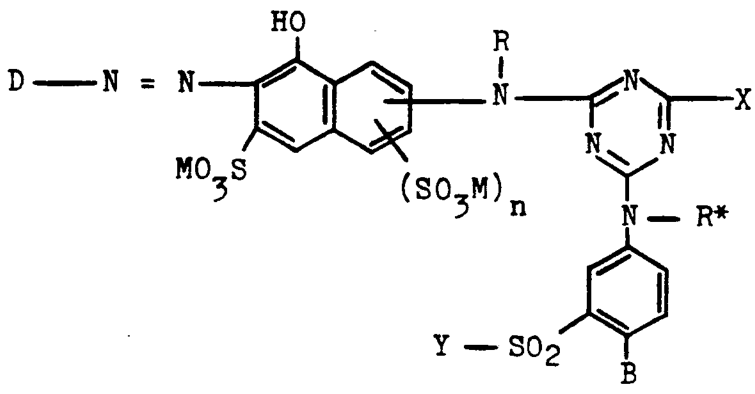

(1)

dans laquelle

D représente un radical naphtyle substitué par 1, 2 ou 3 groupes sulfo ou bien par un groupe $Y—SO_2—$, Y ayant la signification qui sera donnée ci-après, ou encore par un tel groupe $Y—SO_2—$ et 1 ou 2 groupes sulfo, ou bien D est un radical (2a) ou (2b) ci-dessous

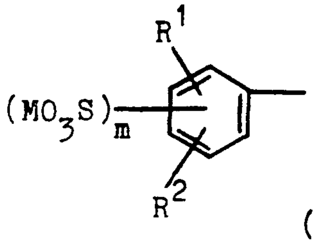

(2a)

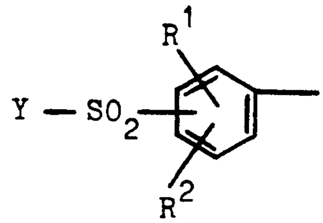

(2b)

dans lesquels

M et Y ont les significations indiquées ci-après,

m est le nombre 0 ou 1 (si m est nul il s'agit évidemment d'un atome d'hydrogène),

$R^1$ représente un atome d'hydrogène ou un alkyle ou un alcoxy en $C_1$—$C_4$ ou un groupe carboxy et

$R^2$ un atome d'hydrogène, un alkyle ou un alcoxy en $C_1$—$C_4$, un groupe sulfo ou carboxy, un aryle éventuellement substitué, un groupe hydroxy ou nitro ou un atome d'halogène,

n est le nombre 0 ou 1 (si n est nul, il s'agit d'un atome d'hydrogène),

R représente un atome d'hydrogène ou un alkyle en $C_1$—$C_4$ éventuellement substitué, et

R* est un atome d'hydrogène ou un alkyle en $C_1$—$C_4$ éventuellement substitué,

R et R* pouvant être identiques ou différents l'un de l'autre;

X désigne un atome de fluor ou de préférence de chlore,

B un groupe de formule (3a) ou (3b) ci-dessous

$-S-R^3$

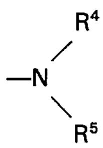

(3b) (3c)

dans lesquelles

$R^3$ est un atome d'hydrogène ou un alkyle en $C_1$—$C_4$ éventuellement substitué ou un aryle éventuellement substitué,

$R^4$ est un atome d'hydrogène ou un alkyle en $C_1$—$C_8$ éventuellement substitué, ou bien un cycloalkyle en $C_5$—$C_8$ avec éventuellement de 1 à 3 groupes méthyle et/ou un groupe amino, alcanoylamino en $C_2$—$C_5$ ou benzoylamino comme substituants, ou le radical phényle avec 1, 2 ou 3 substituants, de l'ensemble sulfo, carboxy, halogènes, alkyles en $C_1$—$C_4$, alcoxy en $C_1$—$C_4$, nitro, un groupe —$SO_2Y'$ (Y' ayant l'une des significations données ci-après pour Y ou étant un groupe β-hydroxyéthyle), alkylamino ou dialkylamino à alkyle en $C_1$—$C_4$, alcanoylamino en $C_2$—$C_5$ et benzoylamino éventuellement substitué, ou bien un radical naphtyle éventuellement substitué par 1, 2 ou 3 groupes sulfo et/ou un groupe —$SO_2Y'$ (Y' ayant la signification précédente), et

$R^5$ a l'une des significations indiquées pour $R^4$, $R^5$ et $R^4$ pouvant être identiques ou différents l'un de l'autre, ou bien

$R^4$ et $R^5$ forment ensemble avec l'atome d'azote et un, deux ou trois alkylènes en $C_1$—$C_5$ et le cas échéant un ou deux autres hétéroatomes, un radical hétérocyclique ayant de 5 à 8 chaînons.

Y est un groupe β-thiosulfatoéthyle, β-phosphatoéthyle, β-chloroéthyle, vinyle ou β-sulfatoéthyle; les Y pouvant être identiques ou différents l'un de l'autre; et

M représente un atome d'hydrogène ou un métal alcalin ou bien l'équivalent d'un métal alcalinoterreux,

procédé caractérisé en ce que l'on fait réagir un composé monoazoïque de formule générale (4)

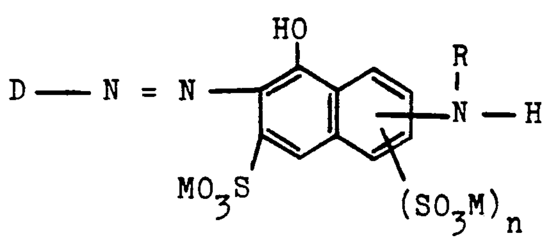

(4)

et une amine aromatique de formule (5)

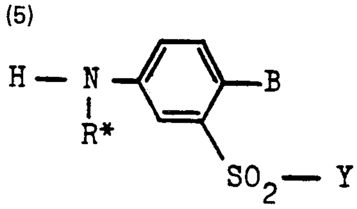

(5)

avec la 2,4,6-trichloro-s-triazine ou la 2,4,6-trifluoro-s-triazine dans un ordre quelconque ou le cas échéant en méme temps, ou bien en ce que l'on copule un acide monohalogéno-triazinamino-naphtolsulfonique de formule générale (8)

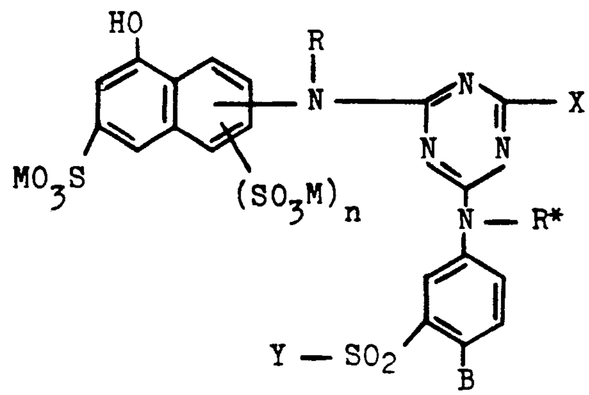

(8)

dans laquelle B, M, n, R, R*, X et Y ont les significations données ci-dessus, avec un composé de diazonium d'une amine aromatique de formule (9)

$$D-NH_2 \quad (9)$$

2. Procédé selon la revendication 1, caractérisé en ce que

$R^3$ est un atome d'hydrogène ou un alkyle en $C_1$—$C_4$ pouvant avoir un substituant pris parmi des alcoxy en $C_1$—$C_4$ et les groupes sulfo, carboxy, hydroxy, alcanoyloxy en $C_2$—$C_5$, sulfato, phényle et phényle substitué par sulfo, carboxy, méthyle, méthoxy, éthoxy et/ou du chlore, ou bien en ce que

$R^4$ est un atome d'hydrogène ou un alkyle en $C_1$—$C_4$ pouvant avoir 1 ou 2 substituants pris parmi les groupes sulfo, carboxy, sulfato, phosphato, alcoxy en $C_1$—$C_4$, hydroxy, alcanoyloxy en $C_2$—$C_5$, phényle et phényle substitué par sulfo, carboxy, méthyle, méthoxy, éthoxy et/ou du chlore, ou encore un groupe cyclopentyle et cyclohexyle pouvant avoir de 1 à 3 groupes méthyle, et

$R^5$ est un atome d'hydrogène ou un alkyle en $C_1$—$C_4$ pouvant avoir 1 ou 2 substituants pris parmi les groupes sulfo, carboxy, sulfato, phosphato, alcoxy en $C_1$—$C_4$, hydroxy, alcanoyloxy en $C_2$—$C_5$, phényle et phényle substitué par sulfo, carboxy, méthyle, méthoxy, éthoxy et/ou du chlore, ou bien $R^5$ est le radical phényle pouvant avoir de 1 à 2 substituants pris parmi les groupes sulfo, carboxy, méthyle, méthoxy, éthoxy, nitro et acétylamino, ou encore un radical naphtyle pouvant avoir de 1, 2 ou 3 groupes sulfo comme substituants,

$R^5$ pouvant être identique à $R^4$ ou différent de $R^4$, ou bien

$R^4$ et $R^5$ forment ensemble et avec l'atome d'azote le radical pipéridino, pipérazino ou morpholino.

3. Procédé selon la revendication 1 ou 2, caractérisé en ce que D est un groupe de formule (2a)

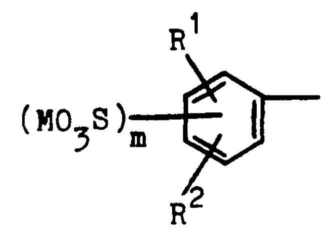

(2a)

dans laquelle

M et m ont les significations indiquées à la revendication 1,

$R^1$ représente un atome d'hydrogène, un alkyle ou un alcoxy en $C_1$—$C_4$ ou un groupe carboxy et

$R^2$ un atome d'hydrogène, un alkyle ou un alcoxy en $C_1$—$C_4$, un groupe sulfo ou un atome d'halogène, ou bien en ce que D est un radical naphtyle-2 avec 1, 2 ou 3 groupes sulfo comme substituants.

4. Procédé selon la revendication 1 ou 2, caractérisé en ce que D est un groupe de formule (2b)

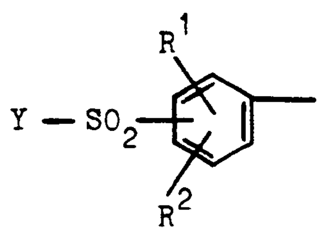

(2b)

dans laquelle

M et Y ont les significations indiquées à la revendication 1,

$R^1$ représente un atome d'hydrogène, un alkyle ou un alcoxy en $C_1$—$C_4$ ou un groupe carboxy et $R^2$ un atome d'hydrogène, un alkyle ou un alcoxy en $C_1$—$C_4$, un groupe sulfo ou un atome d'halogène, ou bien en ce que D est un radical naphtyle-2 avec comme substituants un groupe Y—$SO_2$—, Y ayant la signification indiquée ci-dessus, ou bien un tel groupe Y—$SO_2$— et 1 ou 2 groupes sulfo.

5. Procédé selon la revendication 1 ou 2, caractérisé en ce que D est un groupe de formule (2a) dont $R^1$ est un atome d'hydrogène ou le groupe méthyle, éthyle, méthoxy ou éthoxy et $R^2$ un atome d'hydrogène, un groupe méthoxy, éthoxy ou sulfo ou un atome de chlore.

6. Procédé selon la revendication 1 ou 2, caractérisé en ce que D est un groupe de formule (2b) dont $R^1$ est un atome d'hydrogène ou le groupe méthyle, éthyle, méthoxy ou éthoxy et $R^2$ un atome d'hydrogène ou un groupe méthoxy, éthoxy ou sulfo.

7. Procédé selon une ou plusieurs des revendications 1 à 6, caractérisé en ce que R est un atome d'hydrogène ou le groupe méthyle ou éthyle.

8. Procédé selon une ou plusieurs des revendications 1 à 7, caractérisé en ce que R* est un atome d'hydrogène.

9. Procédé selon une ou plusieurs des revendications 1 à 8, caractérisé en ce que X est un atome de chlore.

10. Procédé selon une des revendications 1 et 3 à 9, caractérisé en ce que $R^4$ est un atome d'hydrogène ou le groupe méthyle ou éthyle et $R^5$ un atome d'hydrogène ou un alkyle en $C_1$—$C_4$ ou bien un alkyle en $C_2$—$C_4$ avec comme substituants un ou deux groupes sulfato ou un groupe sulfo ou un groupe carboxy, ou encore un groupe phényle pouvant avoir un ou deux substituants pris parmi 2 sulfo, 1 alkyle en $C_1$—$C_4$, 1 alcoxy en $C_1$—$C_4$ et 1 chlore.

11. Procédé selon une des revendications 1 et 3 à 9, caractérisé en ce que B est un groupe amino —$NR^4R^5$.

12. Procédé selon la revendication 11, caractérisé en ce que $R^4$ et $R^5$ ont les significations indiquées à la revendication 2 ou 10.

13. Procédé selon une ou plusieurs des revendications 1 à 12, caractérisé en ce que Y est un groupe β-sulfatoéthyle.

14. Procédé selon une ou plusieurs des revendications 1 à 13, caractérisé en ce que M est un atome d'hydrogène ou un métal alcalin.

15. Procédé selon la revendication 1, caractérisé en ce que le composé de formule (1) est un composé de formule (1a)

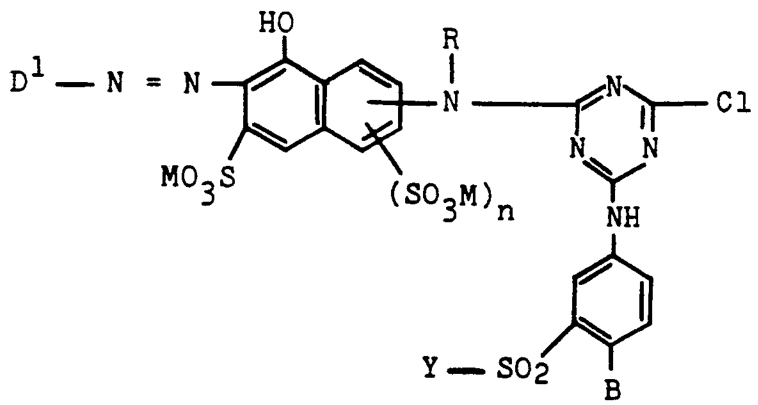

(1a)

dans laquelle $D^1$ est un radical phényle de formule (2a) dont $R^1$, $R^2$, M et m ont l'une des significations indiquées aux revendications précédentes, ou bien un radical naphtyle-2 portant 1, 2 ou 3 groupes sulfo comme substituants, R est un atome d'hydrogène ou le groupe méthyle ou éthyle et M, n B et Y ont l'une des significations indiquées aux revendications précédentes.

16. Procédé selon la revendication 1, caractérisés en ce que le composé de formule (1) est un composé de formule (1b)

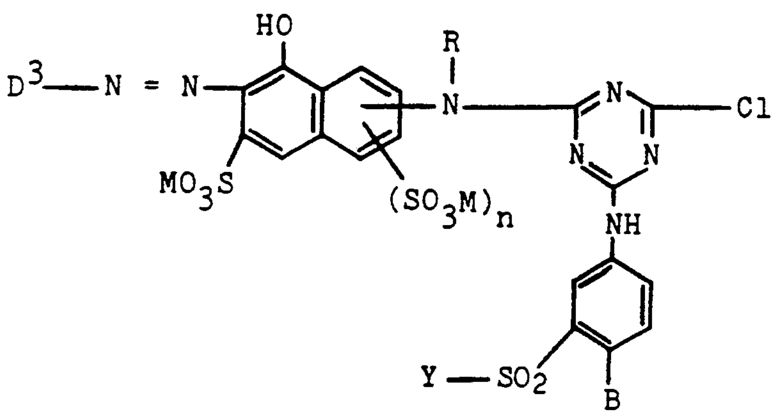

(1b)

dans laquelle $D^3$ un radical phényle de formule (2b) dont $R^1$, $R^2$ et Y ont l'une des significations indiquées aux revendications précédentes, ou bien un radical naphtyle-2 avec comme substituants un groupe Y—$SO_2$—, Y ayant l'une des significations indiquées aux revendications précédentes, ou bien un tel groupe Y—$SO_2$— et un ou deux groupes sulfo, et M, Y, n et B ont l'une des significations indiquées aux revendications précédentes.

17. L'emploi des composés monoazoïques des revendications 1 à 16 comme colorants.

18. Procédé de teinture (y compris l'impression) de matières à groupes hydroxyliques et/ou carboxamides, en particulier de matières fibreuses, par application d'un colorant sur ou dans la matière et fixage du colorant sous l'action de la chaleur et/ou d'un agent liant les acides, procédé caractérisé en ce que l'on utilise comme colorant un composé d'une ou plusieurs des revendications 1 à 16.

**Claims for the Contracting States: BE CH DE FR GT IT LI**

1. A water-soluble monoazo compound which corresponds to the formula (1)

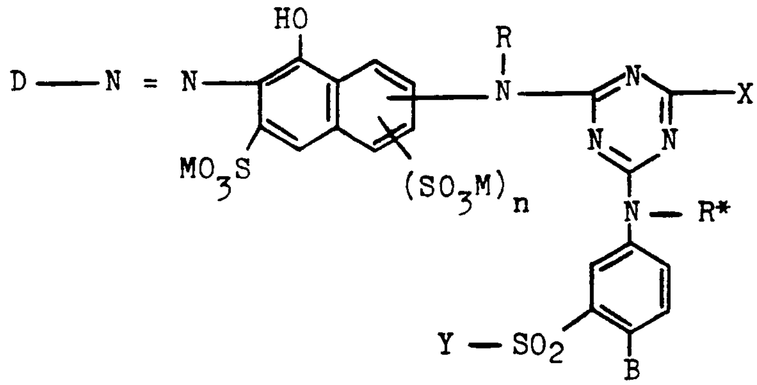

(1)

in which:

D is a naphthyl radical, which is substituted by 1, 2 or 3 sulfo groups or by one group of the formula Y—$SO_2$— where Y has the below-mentioned meaning, or by one such Y—$SO_2$— group and 1 or 2 sulfo groups, or is a radical of the formula (2a) or (2b)

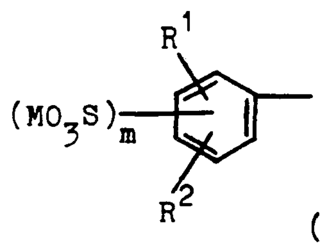

(2a)

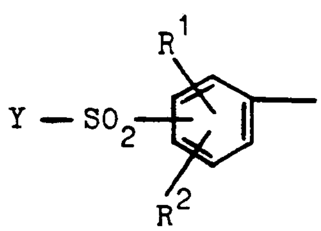

(2b)

in which

M and Y have the below-mentioned meanings,

m represents the number zero or 1,

$R^1$ denotes a hydrogen atom, an alkyl group having 1 to 4 carbon atoms, an alkoxy group having 1 to 4 carbon atoms or a carboxyl group, and

$R^2$ denotes a hydrogen atom, an alkyl group having 1 to 4 carbon atoms, an alkoxy group having 1 to 4 carbon atoms, a sulfo group, a carboxyl group, an aryl radical, which may be substituted, a hydroxyl group, a nitro group or a halogen atom;

n represents the number zero or 1;

R is a hydrogen atom or an optionally substituted alkyl group having 1 to 4 carbon atoms, and

R* is a hydrogen atom or an optionally substituted alkyl group having 1 to 4 carbon atoms,

where R and R* may have meanings which are identical to one another or different from one another;

X is a fluorine atom or a chlorine atom;

B is a group of the formula (3a) or (3b)

—S—$R^3$

(3b)

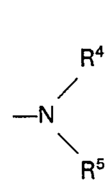

(3c)

in which

$R^3$ is a hydrogen atom, an optionally substituted alkyl group having 1 to 4 carbon atoms, or an optionally substituted aryl radical,

$R^4$ is a hydrogen atom, an optionally substituted alkyl group having 1 to 8 carbon atoms, a cycloalkyl group having 5 to 8 carbon atoms and optionally having 1 to 3 methyl groups and/or one amino group, alkanoylamino group having 2 to 5 carbon atoms or benzoylamino group as substituents, or $R^4$ is the phenyl radical, which may be substituted by 1, 2 or 3 substituents from the series comprising sulfo, carboxyl, halogen, alkyl having 1 to 4 carbon atoms, alkoxy having 1 to 4 carbon atoms, nitro, a group of the formula $-SO_2-Y'$ (in which Y' has one of the below-mentioned meanings for Y or is a β-hydroxyethyl group), alkylamino containing an alkyl radical having 1 to 4 carbon atoms, dialkylamino containing alkyl radicals each having 1 to 4 carbon atoms, alkanoylamino having 2 to 5 carbon atoms, and benzoylamino, or is a naphthyl radical which may be substituted by 1, 2 or 3 sulfo groups and/or a group of the formula $-SO_2-Y'$ (where Y' has the above-mentioned meaning), and

$R^5$ has one of the meanings mentioned for $R^4$, $R^5$ being identical to $R^4$ or different from $R^4$, or

$R^4$ and $R^5$, together with the nitrogen atom and one, two or three alkylene radicals having 1 to 5 carbon atoms and, if appropriate, one or two further heteroatoms, form a 5- or 8-membered heterocyclic radical;

Y is a β-thiosulfatoethyl, β-phosphatoethyl, β-chloroethyl, vinyl or β-sulfatoethyl group; where the Y's may have meanings which are identical to one another or different from one another;

M is a hydrogen atom or an alkali metal or the equivalent of an alkaline-earth metal.

2. A compound as claimed in claim 1, wherein

$R^3$ is a hydrogen atom or an alkyl group having 1 to 4 carbon atoms which may be substituted by one substituent from the series comprising alkoxy having 1 to 4 carbon atoms, sulfo, carboxyl, hydroxyl, alkanoyloxy having 2 to 5 carbon atoms, sulfato, phenyl and phenyl which is substituted by sulfo, carboxyl, methyl, methoxy, ethoxy and/or chlorine, or wherein

$R^4$ is a hydrogen atom or an alkyl group having 1 to 4 carbon atoms which may be substituted by 1 or 2 substituents from the series comprising sulfo, carboxyl, sulfato, phosphato, alkoxy having 1 to 4 carbon atoms, hydroxyl, alkanoyloxy having 2 to 5 carbon atoms, phenyl and phenyl which is substituted by sulfo, carboxyl, methyl, methoxy, ethoxy and/or chlorine, or is a cyclopentyl or cyclohexyl group which may be substituted by 1 to 3 methyl groups, and

$R^5$ is a hydrogen or an alkyl group having 1 to 4 carbon atoms which may be substituted by 1 or 2 substituents from the series comprising sulfo, carboxyl, sulfato, phosphato, alkoxy having 1 to 4 carbon atoms, hydroxyl, alkanoyloxy having 2 to 5 carbon atoms, phenyl and phenyl which is substituted by sulfo, carboxyl, methyl, methoxy, ethoxy and/or chlorine, or is the phenyl radical which may be substituted by 1 or 2 substituents from the series comprising sulfo, carboxyl, methyl, methoxy, ethoxy, nitro and acetylamino, or is a naphthyl radical which may be substituted by 1, 2 or 3 sulfo groups,
where $R^5$ may have the meaning which is identical to $R^4$ or different from $R^4$, or $R^4$ and $R^5$, together with the nitrogen atom, form the piperidino, piperazino or morpholino radical.

3. A compound as claimed in claim 1 or 2, wherein D is a group of the formula (2a)

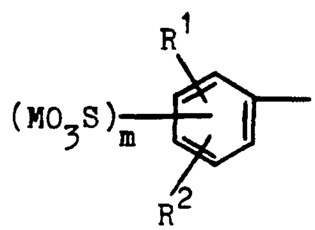

(2a)

in which

M and m have the meanings mentioned in claim 1,

$R^1$ is a hydrogen atom, an alkyl group having 1 to 4 carbon atoms, an alkoxy group having 1 to 4 carbon atoms or a carboxyl group, and

$R^2$ is a hydrogen atom, an alkyl group having 1 to 4 carbon atoms, an alkoxy group having 1 to 4 carbon atoms, a sulfo group or a halogen atom,
or wherein D is a naphth-2-yl radical which is substituted by 1, 2 or 3 sulfo groups.

4. A compound as claimed in claim 1 or 2, wherein D is a group of the formula (2b)

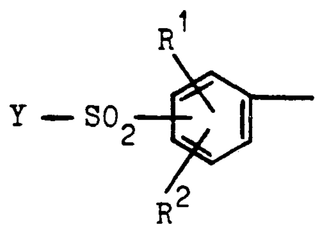

(2b)

in which

M and Y have the meanings mentioned in claim 1,

$R^1$ is a hydrogen atom, an alkyl group having 1 to 4 carbon atoms, an alkoxy group having 1 to 4 carbon atoms or a carboxyl group, and

$R^2$ is a hydrogen atom, an alkyl group having 1 to 4 carbon atoms, an alkoxy group having 1 to 4 carbon atoms, a sulfo group or a halogen atom,

or wherein D is a naphth-2-yl radical which is substituted by a group of the formula $Y—SO_2—$ where Y has the above-mentioned meaning, or by such a $Y—SO_2—$ group and 1 or 2 sulfo groups.

5. A compound as claimed in claim 1 or 2, wherein D is a group of the formula (2a) in which $R^1$ denotes a hydrogen atom, or a methyl, ethyl, methoxy or ethoxy group, and $R^2$ is a hydrogen atom, a methoxy, ethoxy or sulfo group, or a chlorine atom.

6. A compound as claimed in claim 1 or 2, wherein D is a group of the formula (2b) in which $R^1$ is a hydrogen atom or a methyl, ethyl, methoxy or ethoxy group, and $R^2$ denotes a hydrogen atom or a methoxy, ethoxy or sulfo group.

7. A compound as claimed in one or more of claims 1 to 6, wherein R is a hydrogen atom or a methyl or ethyl group.

8. A compound as claimed in one or more of claims 1 to 7, wherein R* is a hydrogen atom.

9. A compound as claimed in one or more of claims 1 to 8, wherein X is a chlorine atom.

10. A compound as claimed in one or more of claims 1 and 3 to 9, wherein $R^4$ is a hydrogen atom, a methyl group or an ethyl group, and $R^5$ is a hydrogen atom or an alkyl group having 1 to 4 carbon atoms or an alkyl group having 2 to 4 carbon atoms which is substituted by one or two sulfato groups or one sulfo group or one carboxyl group, or is a phenyl group which may be substituted by 1 or 2 substituents from the series comprising 2 sulfo, 1 alkyl having 1 to 4 carbon atoms, 1 alkoxy having 1 to 4 carbon atoms and 1 chlorine.

11. A compound as claimed in one or more of claims 1 and 3 to 9, wherein B is an amino group of the formula $—NR^4R^5$.

12. A compound as claimed in claim 11, wherein $R^4$ and $R^5$ having the meanings mentioned in claim 2 or 10.

13. A compound as claimed in one or more of claims 1 to 12, wherein Y is a β-sulfatoethyl group.

14. A compound as claimed in one or more of claims 1 to 13, wherein M is a hydrogen atom or an alkali metal.

15. A compound as claimed in claim 1, corresponding to the formula (1a)

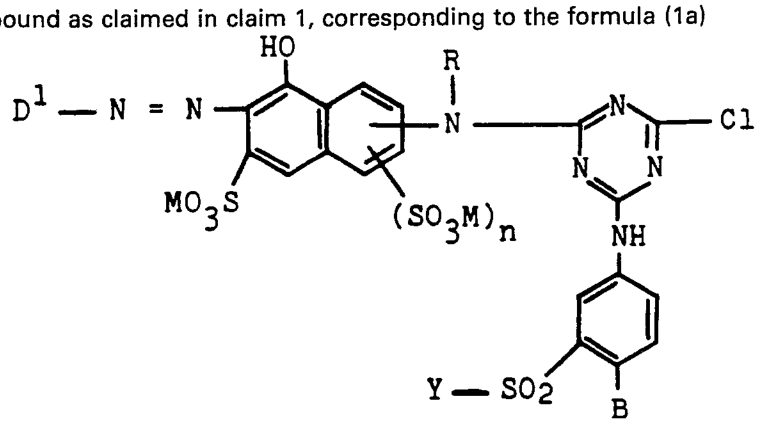

(1a)

in which $D^1$ is a phenyl radical of the formula (2a) in which $R^1$, $R^2$, M and m have one of the meanings mentioned in the previous claims, or is a naphth-2-yl radical which is substituted by 1, 2 or 3 sulfo groups, R represents a hydrogen atom or a methyl or ethyl group, and M, n, B and Y have one of the meanings mentioned in the previous claims.

16. A compound as claimed in claim 1, corresponding to the formula (1b)

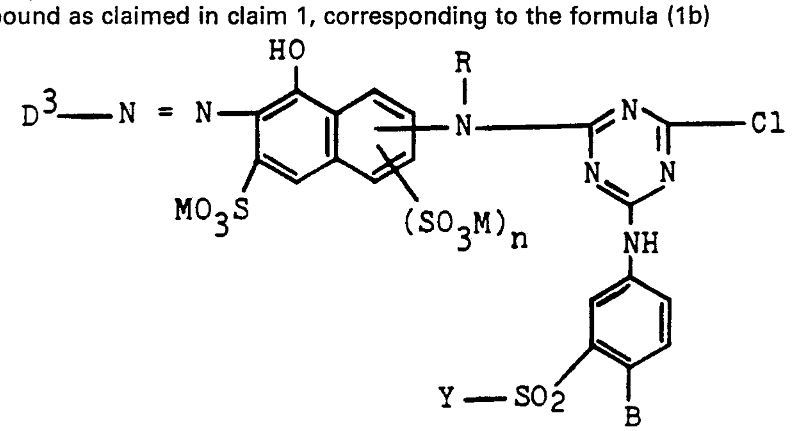

(1b)

in which $D^3$ is a phenyl radical of the formula (2b) in which $R^1$, $R^2$ and Y have the meanings mentioned in the previous claims, or is a naphth-2-yl radical which is substituted by a group of the formula Y—$SO_2$— where Y has one of the meanings mentioned in the previous patent claims, or by such a Y—$SO_2$— group and one or two sulfato groups, and M, Y, and B have one of the meanings mentioned in the previous claims.

17. A process for the preparation of a monoazo compound of the formula mentioned and defined in claim 1, which comprises reacting a monoazo compound of the formula (4)

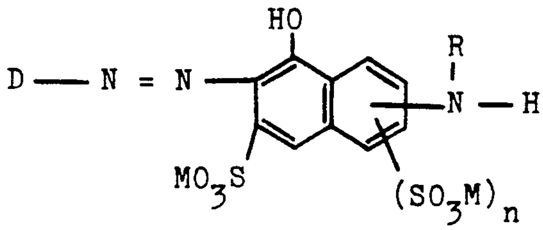

(4)

in which D, M, R and n have the meanings mentioned in claim 1, and an aromatic amine of the formula (5)

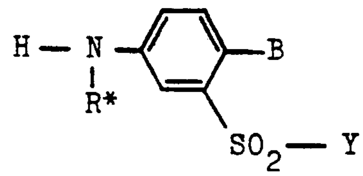

(5)

in which B, R* and Y have the meanings mentioned in claim 1, with 2,4,6-trichloro-s-triazine or 2,4,6-trifluoro-s-triazine in any desired sequence or, if desired, simultaneously, or comprises coupling a monohalotriazinylaminonaphtholsulfonic acid compound of the formula (8)

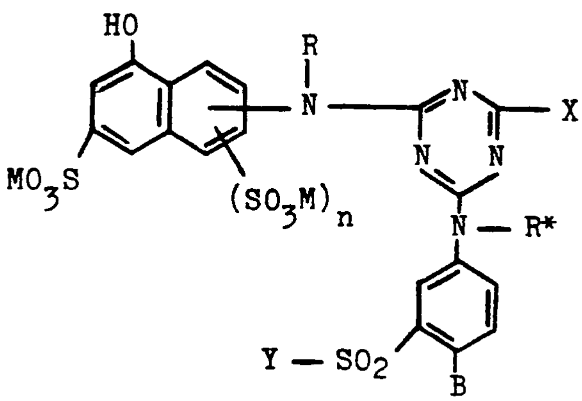

(8)

in which B, M, n, R, R*, X and Y have the meanings mentioned in claim 1, with a diazonium compound of an aromatic amine of the formula (9)

$$D—NH_2 \quad (9)$$

in which D has one of the meanings mentioned in claim 1.

18. The use of a monoazo compound as claimed in one or more of claims 1 to 16 as a dye.

19. A method of dyeing (including printing) a material containing hydroxyl and/or carboxamide groups, in particular fiber material, in which method a dye is applied to the material or incorporated into the material and fixed by means of heat and/or by means of an acid-binding agent, wherein the dye employed is a compound as claimed in one or more of claims 1 to 16.

**Claims for the Contracting State: ES**

1. A process for preparing a water-soluble monoazo compound which corresponds to the formula (1)

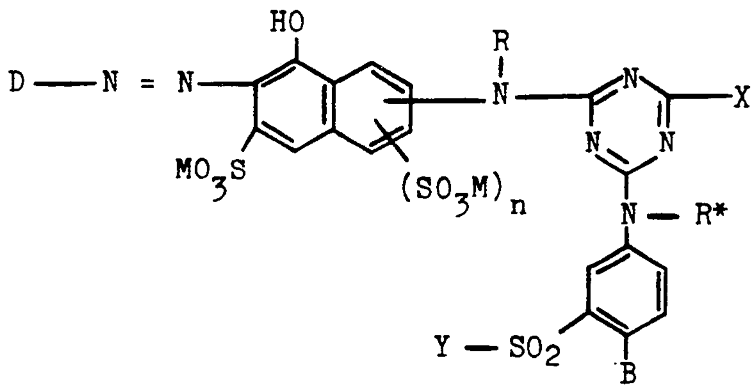

(1)

in which:

D is a naphthyl radical, which is substituted by 1, 2 or 3 sulfo groups or by one group of the formula $Y-SO_2-$ where Y has the below-mentioned meaning, or by one such $Y-SO_2-$ group and 1 or 2 sulfo groups, or is a radical of the formula (2a) or (2b)

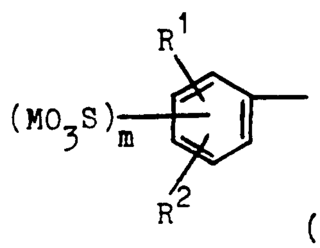

(2a)

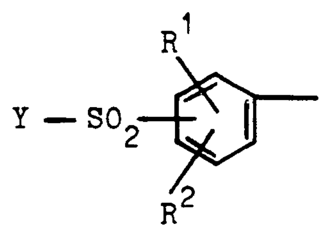

(2b)

in which

M and Y have the below-mentioned meanings,

m represents the number zero or 1,

$R^1$ denotes a hydrogen atom, an alkyl group having 1 to 4 carbon atoms, an alkoxy group having 1 to 4 carbon atoms or a carboxyl group, and

$R^2$ denotes a hydrogen atom, an alkyl group having 1 to 4 carbon atoms, an alkoxy group having 1 to 4 carbon atoms, a sulfo group, a carbo̊xyl group, an aryl radical, which may be substituted, a hydroxyl group, a nitro group or a halogen atom;

n represents the number zero or 1;

R is a hydrogen atom or an optionally substituted alkyl group having 1 to 4 carbon atoms, and

R* is either a hydrogen atom or an optionally substituted alkyl group having 1 to 4 carbon atoms, where R and R* may have meanings which are identical to one another or different from one another;

X is a fluorine atom or a chlorine atom;

B is a group of the formula (3a) or (3b)

$-S-R^3$

(3b)

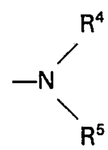

(3c)

in which

$R^3$ is a hydrogen atom, an optionally substituted alkyl group having 1 to 4 carbon atoms, or an optionally substituted aryl radical,

$R^4$ is a hydrogen atom, an optionally substituted alkyl group having 1 to 8 carbon atoms, a cycloalkyl group having 5 to 8 carbon atoms and optionally having 1 to 3 methyl groups and/or one amino group, alkanoylamino group having 2 to 5 carbon atoms or benzoylamino group as substituents, or $R^4$ is the phenyl radical, which may be substituted by 1, 2 or 3 substituents from the series comprising sulfo, carboxyl, halogen, alkyl having 1 to 4 carbon atoms, alkoxy having 1 to 4 carbon atoms, nitro, a group of the formula $-SO_2-Y'$ (in which Y' has one of the below-mentioned meanings for Y or is a β-hydroxyethyl group), alkylamino containing an alkyl radical having 1 to 4 carbon atoms, dialkylamino containing alkyl radicals each having 1 to 4 carbon atoms, alkanoylamino having 2 to 5 carbon atoms, and benzoylamino, or is a naphthyl radical which may be substituted by 1, 2 or 3 sulfo groups and/or a group of the formula $-SO_2-Y'$ (where Y' has the above-mentioned meaning), and

$R^5$ has one of the meanings mentioned for $R^4$, $R^5$ being identical to $R^4$ or different from $R^4$, or

$R^4$ and $R^5$, together with the nitrogen atom and one, two or three alkylene radicals having 1 to 5 carbon atoms and, if appropriate, one or two further heteroatoms, form a 5- or 8-membered heterocyclic radical;

Y is a β-thiosulfatoethyl, β-phosphatoethyl, β-chloroethyl, vinyl or β-sulfatoethyl group; where the Y's may have meanings which are identical to one another or different from one another;

M is a hydrogen atom or an alkali metal or the equivalent of an alkaline-earth metal;

which comprises reacting a monoazo compound of the formula (4)

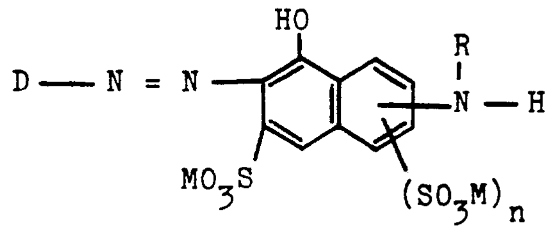

(4)

in which D, M, R and n have the meanings mentioned above, and an aromatic amine of the formula (5)

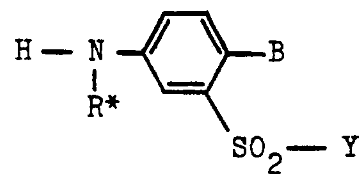

(5)

in which B, R* and Y have the meanings mentioned above, with 2,4,6-trichloro-s-triazine or 2,4,6-trifluoro-s-triazine in any desired sequence or, if desired, simultaneously, or comprises coupling a monohalotriazinylaminonaphtholsulfonic acid compound of the formula (8)

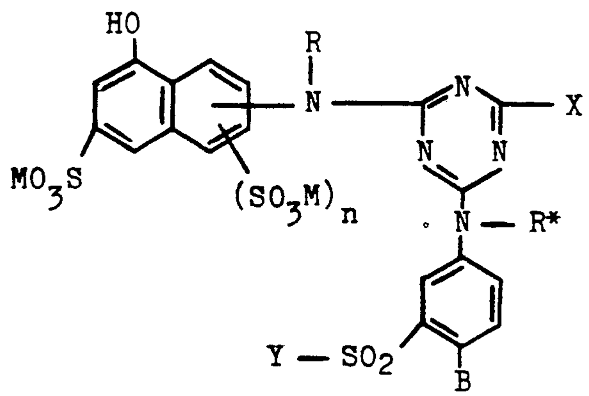

(8)

in which B, M, n, R, R*, X and Y have the meanings mentioned above, with a diazonium compound of an aromatic amine of the formula (9)

$$D{-}NH_2 \quad (9)$$

in which D has one of the meanings mentioned above.

2. The process as claimed in claim 1, wherein

$R^3$ is a hydrogen atom or an alkyl group having 1 to 4 carbon atoms which may be substituted by one substituent from the series comprising alkoxy having 1 to 4 carbon atoms, sulfo, carboxyl, hydroxyl, alkanoyloxy having 2 to 5 carbon atoms, sulfato, phenyl and phenyl which is substituted by sulfo, carboxyl, methyl, methoxy, ethoxy and/or chlorine, or wherein

$R^4$ is a hydrogen atom or an alkyl group having 1 to 4 carbon atoms which may be substituted by 1 or 2 substituents from the series comprising sulfo, carboxyl, sulfato, phosphato, alkoxy having 1 to 4 carbon atoms, hydroxyl, alkanoyloxy having 2 to 5 carbon atoms, phenyl and phenyl which is substituted by sulfo, carboxyl, methyl, methoxy, ethoxy and/or chlorine, or is a cyclopentyl or cyclohexyl group which may be substituted by 1 to 3 methyl groups, and

$R^5$ is a hydrogen or an alkyl group having 1 to 4 carbon atoms which may be substituted by 1 or 2 substituents from the series comprising sulfo, carboxyl, sulfato, phosphato, alkoxy having 1 to 4 carbon atoms, hydroxyl, alkanoyloxy having 2 to 5 carbon atoms, phenyl and phenyl which is substituted by sulfo, carboxyl, methyl, methoxy, ethoxy and/or chlorine, or is the phenyl radical which may be substituted by 1 or 2 substituents from the series comprising sulfo, carboxyl, methyl, methoxy, ethoxy, nitro and acetylamino, or is a naphthyl radical which may be substituted by 1, 2 or 3 sulfo groups.

where $R^5$ may have the meaning which is identical to $R^4$ or different from $R^4$, or $R^4$ and $R^5$, together with the nitrogen atom, form the piperidino, piperazino or morpholino radical.

3. The process as claimed in claim 1 or 2, wherein D is a group of the formula (2a)

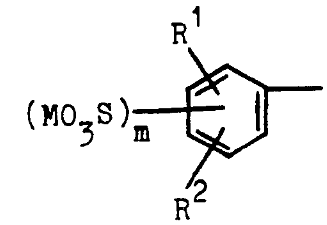

(2a)

in which

M and m have the meanings mentioned in claim 1,

$R^1$ is a hydrogen atom, an alkyl group having 1 to 4 carbon atoms, an alkoxy group having 1 to 4 carbon atoms or a carboxyl group, and

$R^2$ is a hydrogen atom, an alkyl group having 1 to 4 carbon atoms, an alkoxy group having 1 to 4 carbon atoms, a sulfo group or a halogen atom,

or wherein D is a naphth-2-yl radical which is substituted by 1, 2 or 3 sulfo groups.

4. The process as claimed in claim 1 or 2, wherein D is a group of the formula (2b)

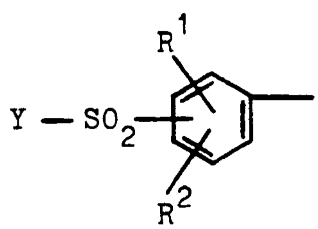

(2b)

in which

M and Y have the meanings mentioned in claim 1,

$R^1$ is a hydrogen atom, an alkyl group having 1 to 4 carbon atoms, an alkoxy group having 1 to 4 carbon atoms or a carboxyl group, and

$R^2$ is a hydrogen atom, an alkyl group having 1 to 4 carbon atoms, an alkoxy group having 1 to 4 carbon atoms, a sulfo group or a halogen atom,

or wherein D is a naphth-2-yl radical which is substituted by a group of the formula $Y—SO_2—$ where Y has the above-mentioned meaning, or by such a $Y—SO_2—$ group and 1 or 2 sulfo groups.

5. The process as claimed in claim 1 or 2, wherein D is a group of the formula (2a) in which $R^1$ denotes a hydrogen atom, or a methyl, ethyl, methoxy or ethoxy group, and $R^2$ is a hydrogen atom, a methoxy, ethoxy or sulfo group, or a chlorine atom.

6. The process as claimed in claim 1 or 2, wherein D is a group of the formula (2b) in which $R^1$ is a hydrogen atom or a methyl, ethyl, methoxy or ethoxy group, and $R^2$ denotes a hydrogen atom or a methoxy, ethoxy or sulfo group.

7. The process as claimed in one or more of claims 1 to 6, wherein R is a hydrogen atom or a methyl or ethyl group.

8. The process as claimed in one or more of claims 1 to 7, wherein R* is a hydrogen atom.

9. The process as claimed in one or more of claims 1 to 8, wherein X is a chlorine atom.

10. A compound as claimed in one or more of claims 1 and 3 to 9, wherein $R^4$ is a hydrogen atom, a methyl group or an ethyl group, and $R^5$ is a hydrogen atom or an alkyl group having 1 to 4 carbon atoms or an alkyl group having 2 to 4 carbon atoms which is substituted by one or two sulfato groups or one sulfo group or one carboxyl group, or is a phenyl group which may be substituted by 1 or 2 substituents from the series comprising 2 sulfo, 1 alkyl having 1 to 4 carbon atoms, 1 alkoxy having 1 to 4 carbon atoms and 1 chlorine.

11. The process as claimed in one or more of claims 1 and 3 to 9, wherein B is an amino group of the formula $—NR^4R^5$.

12. The process as claimed in claim 11, wherein $R^4$ and $R^5$ having the meanings mentioned in claim 2 or 10.

13. The process as claimed in one or more of claims 1 to 12, wherein Y is a β-sulfatoethyl group.

14. The process as claimed in one or more of claims 1 to 13, wherein M is a hydrogen atom or an alkali metal.

15. The process as claimed in claim 1, wherein the compound of the formula (1) is a compound of the formula (1a)

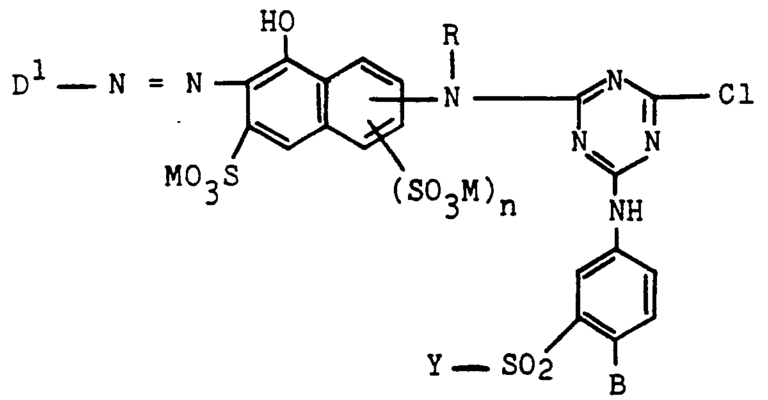

(1a)

in which $D^1$ is a phenyl radical of the formula (2a) in which $R^1$, $R^2$, M and m have one of the meanings mentioned in the previous claims, or is a naphth-2-yl radical which is substituted by 1, 2 or 3 sulfo groups, R represents a hydrogen atom or a methyl or ethyl group, and M, n, B and Y have one of the meanings mentioned in the previous claims.

16. The process as claimed in claim 1, wherein the compound of the formula (1) is a compound of the formula (1b)

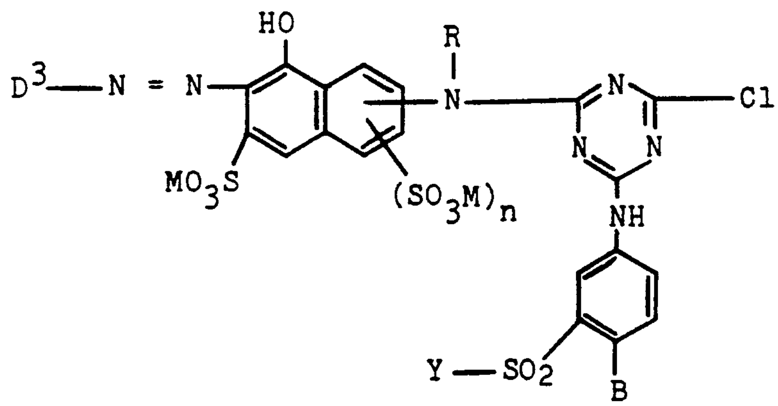

(1b)

in which $D^3$ is a phenyl radical of the formula (2b) in which $R^1$, $R^2$ and Y have the meanings mentioned in the previous claims, or is a naphth-2-yl radical which is substituted by a group of the formula $Y—SO_2—$ where Y has one of the meanings mentioned in the previous patent claims, or by such a $Y—SO_2—$ group and one or two sulfato groups, and M, Y, and B have one of the meanings mentioned in the previous claims.

17. The use of a monoazo compound as claimed in one or more of claims 1 to 16 as a dye.

18. A method of dyeing (including printing) a material containing hydroxyl and/or carboxamide groups, in particular fiber material, in which method a dye is applied to the material or incorporated into the material and fixed by means of heat and/or by means of an acid-binding agent, wherein the dye employed is a compound as claimed in one or more of claims 1 to 16.